# EUROPEAN PATENT APPLICATION

(11) **EP 3 552 721 A1**
(43) Date of publication of application: **16.10.2019**
(21) Application number: 17878578.8
(22) Date of filing: 06.12.2017
(51) Int. Cl.: B08B 3/02, H01M 2/10

(54) **HIGH-PRESSURE CLEANING MACHINE AND HIGH-PRESSURE CLEANING MACHINE ASSEMBLY**

(30) Priority: 06.12.2016 CN 201611109330; 09.12.2016 CN 201611130390; 06.09.2017 CN 201721134430 U; 06.09.2017 CN 201721133752 U; 06.09.2017 CN 201721133754 U; 06.09.2017 CN 201710793793; 06.09.2017 CN 201721133852 U; 18.09.2017 CN 201710839113; 18.09.2017 CN 201721191499 U; 21.09.2017 CN 201721215019 U; 26.09.2017 CN 201721245579 U; 24.11.2017 CN 201721598630 U
(71) Applicant: Positec Power Tools (Suzhou) Co., Ltd, Suzhou, Jiangsu 215123 (CN)
(72) Inventor: QIAO, Yong, Suzhou Jiangsu 215123 (CN)
(74) Representative: Dentons UK and Middle East LLP
(86) International application number: PCT/CN2017/114847
(87) International publication number: WO 2018/103669

(57) **Abstract**

The present disclosure relate to a high-pressure washer and a combination thereof. The high-pressure washer comprises a housing, comprising a base disposed with a jointing surface; tool terminals connected to the base; functional parts, comprising a motor disposed in the housing and a pump transporting water flows outward; the high-pressure washer is capable of being electrically connected to a battery pack, the battery pack comprises a matching surface capable of being jointed and matched with the jointing surface and a plurality of battery pack terminals electrically connected to the tool terminals, the high-pressure washer and the battery pack are inserted and matched to form a jointing cavity allowing the tool terminals to be electrically connected to the battery pack terminals, the jointing cavity is selectively configured on the high-pressure washer or the battery pack, the high-pressure washer is disposed with a sealing structure, and after the battery pack is inserted and matched with the high-pressure washer, the sealing structure is capable of sealing the jointing cavity.

## Description

### BACKGROUND

### Technical Field

Embodiments of the present disclosure relate to a high-pressure washer and a high-pressure washer combination, and in particular to sealing between a housing of the handheld high-pressure washer and a battery pack.

### Related Art

Demand on cleaning always exists in a wide range of family life and outdoor activities.

In family life with the family courtyard as a center, people often need to clean a balcony, a pavement, an outdoor desk and chair, a barbeque grill, an automobile, a bicycle, a garage, pets, garden tools, windows, a pool and outdoor steps, etc. These articles will be inevitably stained with dirt, oil stain, leaves, accumulated dust and the like since their use scenarios are outside the house, are extremely inconvenient to clean with duster cloth, and need to be cleaned by spraying water flows or even high pressure water flows. In order to meet the above needs, the solution on the market is to provide a household high-pressure washer.

In the outdoor activities such as mountain climbing, country crossing, riding, camping, horse riding, boating and the like, since the environment is closer to the nature and the activity is intense, the utensils and animals involved in the activities are easier to get dirty and need to be cleaned timely. For example, after driving in wilderness, the automobiles, motorbikes and bicycles are covered with soil inevitably, and the mud and water plants attached to boat bodies also need to be cleaned after sailing of the boats and rafts. The horse and user also sweat and are stained with mud, and it is best to bath or take a shower timely to avoid body discomfort.

In conclusion, the user always has a demand on cleaning in various scenarios and various locations. However at present, related products on the market have potential safety loopholes since water will infiltrate into the machine in the use process, and danger of electric leakage and electric shock is easily caused.

Therefore, it is necessary to provide a novel high-pressure washer to solve the above problems.

### SUMMARY

In order to overcome the defects of prior art, the problem to be solved by embodiments of the present disclosure is to provide a high-pressure washer capable of adjusting a water outlet pressure.

The technical solution adopted by the embodiment of the present disclosure to solve the existing technical problem is a handheld high-pressure washer, comprising a housing, having a handle for holding and a main body portion disposed at an angle relative to the handle; functional parts, comprising a motor disposed in the housing and a pump driven by the motor; a control unit, disposed in the housing and connected to the motor and controlling the motor to work; and a main switch, disposed on the housing and controlling the motor to be ON and OFF, wherein the housing is further disposed with a speed adjusting element independent from the main switch, and the speed adjusting element is connected to the control unit, and the control unit controls a rotary speed of the motor according to a speed adjusting instruction of the speed adjusting element to adjust the pressure of a liquid flow output by the pump.

In one of the embodiments, the speed adjusting element is a gear speed adjusting element, the gear speed adjusting element has at least two speed gears, and the at least two speed gears are a high speed gear and a low speed gear respectively.

In one of the embodiments, the gear speed adjusting element comprises one operation part having a plurality of operation positions, and the plurality of operation positions of the operation part correspond to different speed gears.

In one of the embodiments, the gear speed adjusting element comprises at least two operation parts, and the at least two operation parts correspond to different speed gears.

In one of the embodiments, the handheld high-pressure washer further comprises a sprinkler head connected to the main body portion, and the sprinkler head comprises one or a combination of more in a long gun sprinkler head, a short gun sprinkler head and a telescopic sprinkler head.

In one of the embodiments, the handheld high-pressure washer comprises a first working mode formed by connecting the main body portion and the long gun sprinkler head and a second working mode formed by connecting the main body portion and the short gun sprinkler head, and a speed adjusting range of the speed adjusting element under the first working mode is different from a speed adjusting range of the speed adjusting element under the second working mode.

In one of the embodiments, when the handheld high-pressure washer is in the first working mode, the speed adjusting range of the speed adjusting element is 0.6Mpa-10Mpa.

In one of the embodiments, when the handheld high-pressure washer is in the second working mode, the speed adjusting range of the speed adjusting element is 0.2Mpa-0.69Mpa.

In one of the embodiments, the control unit further comprises an identifying module, the identifying module is configured to identify a type of the sprinkler head connected to the main body portion, and control the handheld high-pressure washer to be in the first working mode or the second working mode according to the type of the sprinkler head.

In one of the embodiments, a length of the long gun sprinkler head is larger than a length of the short gun sprinkler head, the long gun sprinkler head is disposed with a triggering part, the short gun sprinkler head is not disposed with the triggering part, the identifying module can identify the triggering part and output an identifying result, and the control unit controls the motor to make the handheld high-pressure washer to be in the first working mode or the second working mode according to the identifying result,

In one of the embodiments, the triggering part is a magnet or sensing coil, and the identifying module is a Hall detecting element configured to detect a magnetic field intensity of the magnet or the sensing coil.

In one of the embodiments, the telescopic sprinkler head has a first length sprinkler head formed under a stretching state and a second length sprinkler head formed under a compressed state, and a speed adjusting range of the speed adjusting element when the first length sprinkler head is connected to the main body portion is different from a speed adjusting range of the speed adjusting element when the second length sprinkler head is connected to the main body portion.

In one of the embodiments, the handheld high-pressure washer can identify a type of the sprinkler head connected to the main body portion, and control a rotary speed of the motor according to the identifying result to adjust the pressure of a liquid flow output by the pump.

In view of this, one of the objectives of the embodiment of the present disclosure is to provide a high-pressure washer having a safety lock knob.

In order to realize the above objective, the technical solution adopted by the embodiment of the present disclosure is a handheld high-pressure washer, comprising a housing, having a handle for holding; functional parts, comprising a motor disposed in the housing and a pump driven by the motor; and a starting switch, disposed on the housing and controlling the handheld high-pressure washer to be ON and OFF, wherein the starting switch has an ON position for starting the handheld high-pressure washer and an OFF position for closing the handheld high-pressure washer; the housing is further disposed with a self-lock key, and the self-lock key has a locking state limiting the starting switch from moving to the ON position and an unlocking state enabling the starting switch to move to the ON position; when the self-lock key is in the locking state, the starting switch cannot move to the ON position to start the handheld high-pressure washer; and when the self-lock key is in the unlocking state, the starting switch can move to the ON position to start the handheld high-pressure washer or move to the OFF position from the ON position to close the handheld high-pressure washer.

In one of the embodiments, the starting switch comprises a locking part matched with the self-lock key, when the self-lock key is in the locking state, the self-lock key abuts against the locking part to limit the starting switch from moving to the ON position relative to the housing; and when the self-lock key is in the unlocking state, the starting switch can move to the ON position relative to the housing.

In one of the embodiments, the self-lock key further comprises a key body part, when the starting switch is in the OFF position, the key body part abuts against the locking part, and the key part operably moves relative to the housing along a preset direction, such that the self-lock key moves to the unlocking state from the locking state.

In one of the embodiments, the key body part comprises a pressing unit and a stopping unit disposed at an angle, the self-lock key further comprises an elastic part secured between the housing and the pressing unit in an abutting manner, and the pressing unit operably acts on the elastic part to drive the stopping unit to move along the preset direction.

In one of the embodiments, when the self-lock key is in the locking state, the elastic part is in a non-compressed free state, and when the self-lock key is in the unlocking state, the elastic part is in a compressed state.

In one of the embodiments, a moving path of the locking part is vertical to a moving path of the stopping unit.

In one of the embodiments, the locking part is disposed with an inward dent hollow part, and when the self-lock key is in the unlocking state, the starting switch operably moves to the housing to contain the stopping unit in the hollow part.

In one of the embodiments, when the starting switch moves to the OFF position from the ON position, the locking part moves to a direction away from the stopping unit, such that the stopping unit is separated from the hollow part, and the self-lock key is restored to the locking state under an action of the elastic part.

In one of the embodiments, when the starting switch moves to the ON position, the stopping unit is limited in the hollow part, such that the self-lock key cannot be restored to the locking state under an action of the elastic part.

In one of the embodiments, a furthest path between the starting switch and the handle is smaller than 25mm.

In order to overcome the defects of the prior art, the problem to be solved by the embodiment of the present disclosure is to provide a handheld high-pressure washer capable of radiating efficiently.

The technical solution adopted by the embodiment of the present disclosure to solve the existing technical problem is: a handheld high-pressure washer, comprising a housing, having a handle for holding; a motor disposed in the housing and a pump driven by the motor, wherein the motor comprises a front end part opposite to the pump and a rear end part opposite to the front end part; and a switch, disposed on the housing and configured to start or close the handheld high-pressure washer; wherein the motor further comprises a motor shell, the motor shell is disposed with a first opening in a position of the front end part, the housing is disposed with a first air inlet in a position close to the first opening, the rear end part of the motor is connected to a fan, the housing is disposed with an air outlet in a position close to the fan, the motor drives the fan to rotate, a generated cooling airflow inflows from the first air inlet and the first opening in sequence, passes by the interior of the motor, and outward outflows from the air outlet, and a first cooling passage for cooling the motor is formed between the first air inlet and the air outlet.

In one of the embodiments, the fan is disposed in the motor shell, the motor shell is disposed with an air hole in a peripheral position of the fan, the air outlet is communicated with the air hole, the motor drives the fan to rotate, and a generated cooling airflow flows into the first cooling passage, passes by the air hole and outward outflows from the air outlet.

In one of the embodiments, the motor shell is disposed with a second opening in a position of the rear end part of the motor, the housing is disposed with a second air inlet capable of being communicated with the outside in a position below the second opening, the motor drives the fan to rotate, a generated cooling airflow inflows from the second air inlet, inflows from the second opening, passes by the rear end part of the motor and outward outflows from the air outlet, and a second cooling passage for cooling the motor is formed between the second air inlet and the air outlet.

In one of the embodiments, the inner wall of the housing is inward convexly disposed with a first partition plate, the first partition plate abuts against the outer wall of the motor shell in a peripheral direction, and the first partition plate is disposed between the second air inlet and the air outlet.

In one of the embodiments, the inner wall of the housing is inward and convexly disposed with a second partition plate, the second partition plate abuts against the outer wall of the motor shell in a peripheral direction, and the second partition plate is disposed between the first air inlet and the air outlet.

In one of the embodiments, an orthogonal projection of the switch on a plane of the second air inlet covers the second air inlet, and when the switch is in the ON position of starting the handheld high-pressure washer, the switch shields the second air inlet.

In one of the embodiments, the first air inlet comprises at least one air inlet groove, the air outlet comprises at least one air outlet groove, the air inlet groove and the air outlet groove are formed by inward concaving the outer wall of the housing respectively, the bottoms of the air inlet groove and the air outlet groove have a stopping plate respectively, and a clearance exists between the stopping plates and the housing.

In one of the embodiments, an extending direction of the air inlet groove is parallel with an axial direction of the motor, and an extending direction of the air outlet groove is vertical to an axial direction of the motor.

In one of the embodiments, the directions of openings of the air inlet groove and the air outlet groove and the direction of an opening of the clearance are disposed at an angle respectively.

In one of the embodiments, the directions of openings of the air inlet groove and the air outlet groove and the direction of an opening the clearance are disposed at an angle of 90 degrees respectively.

The problem to be solved by the embodiment of the present disclosure is to provide a handheld high-pressure washer easy for adjusting a water pressure by one hand operation.

The technical solution adopted by the embodiment of the present disclosure to solve the existing technical problem is a sprinkler head that can be matched and connected with a high-pressure washer, the high-pressure washer comprises a water outlet part transporting water flows outward and the sprinkler head comprises:
a sprinkler head housing, having a base part and a matching-connecting part located on one end of the base part, wherein the matching-connecting part can be inserted and matched with the water outlet part; and
a nozzle, connected to the other end of the base part;
after the matching-connecting part is inserted and matched with the water outlet part, the matching-connecting part cannot rotate relative to the water outlet part, the water flows are converged to the sprinkler head housing from the water outlet part and are sprayed outward from the nozzle, and the nozzle operably rotates relative to the sprinkler head housing to realize that the water flows of different types are outward sprayed from the nozzle.

In one of the embodiments, one of the water outlet part and the matching-connecting part is configured to be an anti-rotation plug, and the other of the water outlet part and the matching-connecting part is configured to be an anti-rotation plugging opening non-rotatably connected to the anti-rotation plug.

In one of the embodiments, the anti-rotation plug is a flat and square structure, and the anti-rotation plugging opening is a flat and square groove adaptive to the flat and square structure.

In one of the embodiments, the nozzle comprises a plurality of water outlets of different types, the nozzle has a water flow passage communicated with the water outlets, and one of the plurality of water outlets communicates with the water flow passage to form the above water flows of different types which are outward sprayed from the nozzle.

The embodiment of the present disclosure further provides a high-pressure washer adopting the above sprinkler head, the high-pressure washer comprises a housing, comprising a water outlet part outward transporting water flows; functional parts, comprising a pump configured to outward transport the water flows and a motor driving the pump to work; a sprinkler head, connected to the housing, wherein the sprinkler head comprises a sprinkler head housing, having a base part and a matching-connecting part located on one end of the base part, and the matching-connecting part can be inserted and matched with the water outlet part; and a nozzle, connected to the other end of the base part, wherein when the matching-connecting part is inserted and matched with the water outlet part, the matching-connecting part cannot rotate relative to the water outlet part, the water flows are converged to the sprinkler head housing from the water outlet part and are outward sprayed from the nozzle, and the nozzle operably rotates relative to the sprinkler head housing to realize that the water flows of different types are outward sprayed from the nozzle.

In one of the embodiments, the nozzle has a rotary shaft rotating relative to the sprinkler head housing, the high-pressure washer comprises a locking component disposed in a joint between the matching-connecting part and the water outlet part, the locking component has a locking position limiting the sprinkler head from moving in an extending direction of the rotary shaft, and a releasing position where the sprinkler head can be separated from the water outlet part along the extending direction of the rotary shaft.

In one of the embodiments, the housing comprises a handle for holding and a main body portion disposed an angle relative to the handle, and the motor and the pump are disposed in the main body portion.

In one of the embodiments, the water outlet part is formed on a free end of the main body portion, the free end and the handle are located on both sides of the main body portion, and the water flows can flow to the sprinkler head from the free end under pressurizing of the pump, to outward spray the water flows.

In one of the embodiments, the housing further comprises a gun rod accessory connected between the sprinkler head and the main body portion, the gun rod accessory comprises one or a combination of more in a long gun accessory, a short gun accessory and a telescopic gun rod accessory, one end of the gun rod accessory is communicated and jointed with the main body portion, the water outlet part is formed on the other end of the gun rod accessory, the water flows flow to the other end of the gun rod accessory from the main body portion under pressurizing of the pump, and are outward sprayed by the sprinkler head.

In one of the embodiments, the high-pressure washer comprises a universal rod connected between the housing and the sprinkler head, the universal rod comprises a universal rod head, the universal rod head can be directly connected to the housing, and the water outlet part is configured on the universal rod and disposed opposite to the universal rod head.

In one of the embodiments, the sprinkler head housing further comprises a universal connecting part connected between the base part and the matching-connecting part, the universal connecting part is detachably connected to the matching-connecting part, the sprinkler head housing comprises a first working mode in which the universal connecting part can be directly communicated and connected with the water outlet part and a second working mode in which the matching-connecting part is directly communicated and connected with the water outlet part, and the sprinkler head is selectively switched between the first working mode and the second working mode.

In one of the embodiments, one of the water outlet part and the matching-connecting part is configured to be an anti-rotation plug, and the other of the water outlet part and the matching-connecting part is configured to be an anti-rotation plugging opening non-rotatably connected to the anti-rotation plug.

In one of the embodiments, the anti-rotation plug is a flat and square structure, and the anti-rotation plugging opening is a flat and square groove adaptive to the flat and square structure.

In view of this, the technical problem to be solved by the embodiment of the present disclosure is to provide a water inlet pipe component with higher portability.

In order to realize the above objective, the technical solution adopted by the embodiment of the present disclosure is:
A water inlet pipe component, configured to be connected to a high-pressure washer for absorbing an external water source, the water inlet pipe component comprises a water pipe, disposed with a water outlet connected to the high-pressure washer and a water inlet disposed opposed to the water outlet; and an interface part, connected to the water inlet and communicated with the water pipe; the water inlet pipe component further comprises a filter tip component, the filter tip component comprises a first filter part detachably connected to the interface part, the interface part has a first universal interface, the universal interface is selectively connected to the first filter part and a water source pipeline interface, the water inlet pipe component comprises a first working mode of connecting the first filter part to the universal interface for absorbing the external water source and a second working mode of connecting the water source pipeline interface to the universal interface for absorbing the external water source.

In one of the embodiments, the cleanliness of an external water source connected to the water inlet pipe component under the first working mode is smaller than the cleanliness of an external water source connected to the water inlet pipe component under the second working mode.

In one of the embodiments, the water source pipeline interface is a garden hose or water faucet.

In one of the embodiments, the first filter part comprises a plurality of groove holes hollowed inside and outside, and when the first filter part is connected to the interface part, the groove holes, the universal interface and the water pipe are communicated with each other.

In one of the embodiments, the filter tip component further comprises a second filter part, the second filter part is configured in a containing cavity formed by the interface part and the first filter part, the second filter part is disposed with a plurality of filter holes, the filter holes, the groove holes, the universal interface and the water pipe are communicated with each other, and an aperture of each filter hole is smaller than the aperture of each groove hole.

In one of the embodiments, the second filter part is independent from the first filter part, and the second filter part comprises a filter net and a support frame for supporting the filter net.

In one of the embodiments, the water inlet pipe component further comprises a third working mode in which the interface part is separated from the filter tip component and the water source pipeline interface, and the interface part is independently connected to the external water source.

In one of the embodiments, the water inlet pipe component comprises a hook part detachably connected to the water pipe, when the external water source is a water source contained in a container device, the hook part can be connected to the container device to locate the water pipe.

In one of the embodiments, the hook part comprises a first clamping part connected to the container device and a second clamping part clamped with the water pipe, the second clamping part outward convexly extends from the first clamping part, the first clamping part comprises two clamping arms disposed oppositely, and free ends of the two clamping arms are disposed with at least one bending region to prevent the hook part from being separated from the container device.

In one of the embodiments, the water inlet pipe component further comprises a counterweight part, and the counterweight part is disposed deviated from a water outlet of the water pipe.

In one of the embodiments, the counterweight part comprises a hoop part and a fastening part for fastening the hoop part, and the hoop part is disposed in a joint region between the interface part and the water pipe.

In one of the embodiments, the water inlet pipe component comprises a suspension part, and the suspension part is connected between a water inlet and the water outlet of the water pipe.

In one of the embodiments, the suspension part is movably connected to the water pipe, the water pipe axially extends along a middle axis, the middle axis and a plane of the water inlet form an intersection point, the suspension part comprises a top close to the water outlet, and a linear distance between the top and the intersection point is larger than or equal to 25cm.

In one of the embodiments, the water inlet pipe component further comprises a jointing component connected to the water outlet, and the jointing component can realize fast insertion connection with the high-pressure washer.

In view of this, the technical problem to be solved by the embodiment of the present disclosure is to provide a high-pressure washer with higher portability.

In order to realize the above objective, the technical solution adopted by the embodiment of the present disclosure is:
A high-pressure washer, comprising a housing; functional parts, comprising a motor disposed in the housing and a pump outward transporting water flows; a water inlet pipe component, comprising a water pipe, disposed with a water outlet connected to the high-pressure washer and a water inlet disposed opposite to the water outlet; and an interface part, connected to the water inlet and communicated with the water pipe; the water inlet pipe component further comprises a filter tip component, the filter tip component comprises a first filter part detachably connected to the interface part, the interface part has a universal interface, the universal interface is selectively connected to the first filter part and a water source pipeline interface, the water inlet pipe component comprises a first working mode of connecting the first filter part to the universal interface for absorbing an external water source and a second working mode of connecting the water source pipeline interface to the universal interface for absorbing the external water source.

In one of the embodiments, the cleanliness of an external water source connected to the water inlet pipe component under the first working mode is smaller than the cleanliness of an external water source connected to the water inlet pipe component under the second working mode.

In one of the embodiments, the water source pipeline interface is a garden hose or water faucet.

In one of the embodiments, the high-pressure washer is a handheld high-pressure washer, and the housing comprises a handle for holding and a main body portion disposed at an angle relative to the handle.

In view of this, the technical problem to be solved by the embodiment of the present disclosure is to provide a water inlet pipe component with higher portability.

In order to realize the above objective, the technical solution adopted by the embodiment of the present disclosure is:
A water inlet pipe component, configured to be connected to a high-pressure washer for absorbing an external water source, the water inlet pipe component comprises a water pipe, axially extended along a middle axis, including a water outlet connected to the high-pressure washer and a water inlet disposed opposed to the water outlet; and an interface part, connected to the water inlet and communicated with the water pipe; the water inlet pipe component comprises a suspension part, and the suspension part is connected between a water inlet and the water outlet of the water pipe, the middle axis and a plane of the water inlet form an intersection point, the suspension part comprises a top close to the water outlet, and a linear distance between the top and the intersection point is larger than or equal to 25cm.

In one of the embodiments, a linear distance between the top and the intersection point is 30-100cm.

In one of the embodiments, the suspension part comprises a main body portion and a coating layer coated on the periphery of the main body portion, and a color of the coating layer is different from colors of the water pipe and the external water source.

In one of the embodiments, the water inlet pipe component comprises a filter tip component, the filter tip component is detachably connected to the interface part, the filter tip component comprises a first filter part and a second filter part, the first filter part is connected to the interface part, and the second filter part is configured to be in a containing cavity formed by the interface part and the first filter part.

In one of the embodiments, the first filter part comprises a plurality of groove holes hollowed inside and outside, the groove holes and the water pipe are communicated with each other, the second filter part is disposed with a plurality of filter holes, the filter holes, the groove holes and the water pipe are communicated with each other, and an aperture of each filter hole is smaller than the aperture of each groove hole.

In one of the embodiments, the water inlet pipe component comprises a counterweight part, and the counterweight part is disposed between the suspension part and the water inlet.

In one of the embodiments, the counterweight part comprises a hoop part and a fastening part for fastening the hoop part, and the hoop part circle is disposed in a joint region between the interface part and the water pipe.

In one of the embodiments, when the water inlet pipe component enters the external water source, a buoyancy generated by the suspension part is larger than or equal to a total gravity of the filter tip component, the interface part and the counterweight part.

In one of the embodiments, the water inlet pipe component comprises a hook part detachably connected to the water pipe, when the external water source is a water source contained in a container device, the hook part can be connected to the container device to locate the water pipe.

In view of this, the technical problem to be solved by the embodiment of the present disclosure is to provide a high-pressure washer with higher portability.

In order to realize the above objective, the technical solution adopted by the embodiment of the present disclosure is:
A high-pressure washer, comprising a shell; functional parts, comprising a motor disposed in the housing and a pump outward transporting water flows; a water inlet pipe component, comprising a water pipe, axially extended along a middle axis, including a water outlet connected to the high-pressure washer and a water inlet disposed opposed to the water outlet; and an interface part, connected to the water inlet and communicated with the water pipe; the water inlet pipe component comprises a suspension part, and the suspension part is connected between a water inlet and the water outlet of the water pipe, the middle axis and a plane of the water inlet form an intersection point, the suspension part comprises a top close to the water outlet, and a linear distance between the top and the intersection point is larger than or equal to 25cm.

In view of this, the technical problem to be solved by the embodiment of the present disclosure is to provide a high-pressure washer with higher portability and better cleaning efficiency.

In order to realize the above objective, the technical solution adopted by the embodiment of the present disclosure is:
A handheld high-pressure washer, comprising a housing, which comprises a handle for holding, a main body portion disposed at an angle relative to the handle and a water outlet part for outward spraying water flows; functional parts, comprising a motor disposed in the housing and a pump for outward transporting the water flows; and a starting switch, disposed on the housing and configured to control the handheld high-pressure washer to be in an ON state or OFF state; and a working water pressure outward output by the handheld high-pressure washer is 0.2Mpa-10Mpa, and a working water flow output outward is 1.5L/Min-8L/Min.

In one of the embodiments, when the working water pressure outward output by the handheld high-pressure washer is larger than or equal to 0.2Mpa and smaller than 0.6Mpa, a ratio of the working water pressure to the working water flow is 0.025-0.18; and when the working water pressure outward output by the handheld high-pressure washer is larger than or equal to 0.6Mpa and smaller than or equal to 10Mpa, a ratio of the working water pressure to the working water flow is 0.25-2.5.

In one of the embodiments, when the working water pressure outward output by the handheld high-pressure washer is larger than or equal to 0.2Mpa and smaller than 0.6Mpa, the working water flow is larger than or equal to 1.5L/Min and smaller than or equal to 8L/Min.

In one of the embodiments, when the working water pressure outward output by the handheld high-pressure washer is larger than or equal to 0.6Mpa and smaller than 10Mpa, the working water flow is larger than or equal to 1.5L/Min and smaller than or equal to 8L/Min.

In one of the embodiments, the handheld high-pressure washer is powered by adopting direct current, and a direct current power source is a battery pack, an amount of the battery pack is configured to be one or more, and a rated voltage of one battery pack is 18-56V.

In one of the embodiments, the pump comprises a pump body and a single plunger disposed in the pump body, the handheld high-pressure washer comprises a transmission mechanism connected to the single plunger, and the transmission mechanism is configured to convert rotational motion of the motor into reciprocating motion of the single plunger.

In one of the embodiments, the motor is a high rotary speed motor, a rotary speed of the motor is larger than 10000 revolutions per minute, the transmission mechanism comprises a gear speed reduction mechanism, and a speed reduction ratio of the gear speed reduction mechanism is between 12:1 and 3:1.

In one of the embodiments, the transmission mechanism comprises an eccentric mechanism connected between the pump and the gear speed reduction mechanism, and the motor drives the eccentric mechanism to move so as to drive the single plunger to reciprocate in the pump body.

In one of the embodiments, the handheld high-pressure washer comprises a battery pack for powering the functional parts, when a weight of the functional parts of the handheld high-pressure washer is smaller than or equal to 1200g, and the weight of the single battery pack is smaller than or equal to 1000g, a working water pressure outward output by the handheld high-pressure washer is 0.2Mpa-6Mpa, and a working water flow is 1.5L/Min-8L/Min.

In one of the embodiments, an amount of the battery pack is one, a rated voltage of the one battery pack is 18V, a rated capacity is 2Ah, and when the handheld high-pressure washer is in the ON state, a time range in which the water outlet part continuously sprays water flows outward is 10-60min.

In one of the embodiments, the pump comprises a pump body and three plungers disposed in the pump body, the handheld high-pressure washer comprises a transmission mechanism connected to the three plungers, and the transmission mechanism is configured to convert rotational motion of the motor into reciprocating motion of the three plungers.

In one of the embodiments, the motor is a high rotary speed motor, a rotary speed of the motor is larger than 10000 revolutions per minute, the transmission mechanism comprises a gear speed reduction mechanism, and a speed reduction ratio of the gear speed reduction mechanism is between 12:1 and 3:1.

In one of the embodiments, the transmission mechanism comprises a swash plate mechanism connected between the pump and the gear speed reduction mechanism, and the motor drives the swash plate mechanism to move so as to drive the three plungers to reciprocate in the pump body.

In one of the embodiments, the handheld high-pressure washer comprises a battery pack for powering the functional parts, when a weight of the functional parts of the handheld high-pressure washer is smaller than or equal to 2500g, and the weight of the single battery pack is smaller than or equal to 1500g, a working water pressure outward output by the handheld high-pressure washer is 2Mpa-10Mpa, and a working water flow is 3L/Min-8L/Min.

In one of the embodiments, a rated voltage of the battery pack is 18V, and when a rated capacity of the single battery pack is 2Ah, an amount of the battery packs is two; when a rated capacity of the single battery pack is 4Ah, an amount of the battery pack is one; and when the handheld high-pressure washer is in the ON state, a time range in which the handheld high-pressure washer continuously sprays water flows outward is 10-120min.

In one of the embodiments, a weight of the handheld high-pressure washer is larger than or equal to 1.5kg and smaller than or equal to 6kg.

In one of the embodiments, the housing further comprises a speed adjusting element independent from the starting switch, the handheld high-pressure washer comprises a control unit disposed in the housing, the control unit is configured to control the motor to work, the speed adjusting unit is connected to the control unit, and the control unit controls a rotary speed of the motor according to a speed adjusting instruction of the speed adjusting element, so as to adjust the pump to output a corresponding working water pressure.

In order to realize the above objective, another technical solution adopted by the embodiment of the present disclosure is:
A handheld high-pressure washer, comprising a housing, which comprises a handle for holding, a main body portion disposed at an angle relative to the handle and a water outlet part for outward spraying water flows; functional parts, comprising a motor disposed in the housing and a pump outward transporting water flows; and a starting switch, disposed on the housing and configured to control the handheld high-pressure washer to be in an ON state or OFF state; the handheld high-pressure washer has a spraying mode and a cleaning mode, and when the handheld high-pressure washer is in the spraying mode, a working water pressure outward output by the handheld high-pressure washer is larger than or equal to 0.2Mpa and smaller than or equal to 0.6Mpa, and a working water flow is larger than or equal to 1.5L/Min and smaller than or equal to 8L/Min; and when the handheld high-pressure washer is in the cleaning mode, a working water pressure outward output by the handheld high-pressure washer is larger than or equal to 0.6Mpa and smaller than or equal to 10Mpa, and a working water flow is larger than or equal to 1.5L/Min and smaller than or equal to 8L/Min.

In one of the embodiments, when the handheld high-pressure washer is in the spraying mode, a ratio of the working water pressure to the working water flow is 0.025-0.18, and when the handheld high-pressure washer is in the cleaning mode, a ratio of the working water pressure to the working water flow is 0.25-2.5.

In view of this, the technical problem to be solved by the embodiment of the present discourse is to provide a high-pressure washer which is simple in structure and is waterproof.

A high-pressure washer, comprising: a housing, comprising a base disposed with a jointing surface; tool terminals, connected to the base; functional parts, comprising a motor disposed in the housing and a pump transporting water flows outward; and the high-pressure washer is capable of being electrically connected to a battery pack, the battery pack comprises a matching surface capable of being jointed and matched with the jointing surface and a plurality of battery pack terminals electrically connected to the tool terminals, the high-pressure washer and the battery pack are inserted and matched to form a jointing cavity electrically connected to the terminal of the battery pack, the jointing cavity is selectively configured on the high-pressure washer or the battery pack, the high-pressure washer is disposed with a sealing structure, and after the battery pack is inserted and matched with the high-pressure washer, the sealing structure is capable of sealing the jointing cavity.

In one of the embodiments, the tool terminals at least partially and outward convexly extends on the jointing surface, the battery pack comprises an insertion space containing the battery pack terminals and allowing the tool terminals to insert to be electrically connected to the battery pack terminals, and the insertion space forms the jointing cavity allowing the tool terminals to be electrically connected to the battery pack terminals.

In one of the embodiments, the battery pack terminals at least partially and outward convexly extend on the matching surface, the housing comprises a jointing space containing the tool terminals and allowing the battery pack terminals to insert to be electrically connected to the tool terminals, and the jointing space forms the jointing cavity allowing the tool terminals to be electrically connected to the battery pack terminals.

In one of the embodiments, the sealing structure is connected to the jointing surface, the sealing structure is attached to at least part of the jointing surface, and after the battery pack is inserted and matched with the high-pressure washer, the sealing structure is capable of sealing the jointing cavity.

In one of the embodiments, the sealing structure is a soft gasket, and comprises a plurality of openings to be correspondingly inserted by the tool terminals or the battery pack terminals.

In one of the embodiments, the housing comprises a battery mounting seat, the battery mounting seat comprises a pair of opposite side parts, the side parts and the base define a battery pack receiving chamber, the battery pack receiving chamber at least has three walls, comprising a base wall and two side walls extending along a direction vertical to a direction of the base wall, the base comprises a top wall extending along a direction vertical to a direction of the jointing surface, the sealing structure is connected on the base wall, the top wall and the side walls, and after the high-pressure washer is inserted and matched with the battery pack, the jointing cavity is located in a region defined by the sealing structure.

In one of the embodiments, the housing comprises a battery mounting seat, the battery mounting seat comprises a pair of opposite side parts, the side parts and the base define a battery pack receiving chamber, the battery pack receiving chamber at least has three walls, comprising a base wall and a pair of side walls extending along a direction vertical to a direction of the base wall, the side parts are disposed with a bottom wall vertical to the side walls, the sealing structure is connected on the bottom wall, the side walls and the base wall, and after the high-pressure washer is inserted and matched with the battery pack, the jointing cavity is located in a region defined by the sealing structure.

In one of the embodiments, the battery pack comprises a pack bottom and a pack cover connected to the pack bottom, and the pack cover is disposed with a heat dissipation hole.

In one of the embodiments, the high-pressure washer further comprises a heat dissipation hole gasket disposed on the housing and configured to seal the heat dissipation hole, and the heat dissipation hole gasket is located above the heat dissipation hole.

In one of the embodiments, the housing comprises a containing groove for containing the heat dissipation hole gasket, and the heat dissipation hole gasket comprises an outer surface facing the heat dissipation hole, and when the heat dissipation hole gasket is connected to the containing groove, and the outer surface at least partially goes beyond the base wall of the housing.

In one of the embodiments, the battery pack further comprises a heat dissipation hole gasket disposed on the pack cover and configured to seal the heat dissipation hole, and the heat dissipation hole gasket is located above the heat dissipation hole.

In one of the embodiments, the high-pressure washer is a handheld high-pressure washer and the housing comprises a handle for holding and a main body portion disposed at an angle relative to the handle.

A high-pressure washer, capable of being electrically connected to a battery pack and comprising: a housing, comprising a base disposed with a jointing surface; tool terminals, connected to the base; functional parts, comprising a motor disposed in the housing and a pump transporting water flows outward; the battery pack comprises a matching surface capable of being jointed and matched with the jointing surface and a plurality of battery pack terminals electrically connected to the tool terminals, the high-pressure washer and the battery pack are inserted and matched to form a jointing cavity allowing the tool terminals to be electrically connected to the battery pack terminals, and the jointing cavity is selectively configured on the high-pressure washer or the battery pack; at least one of the high-pressure washer and the battery pack is disposed with a sealing structure, and after the battery pack is inserted and matched with the high-pressure washer, the sealing structure is capable of sealing the jointing cavity.

In one of the embodiments, the tool terminals at least partially and outward convexly extends on the jointing surface, the battery pack comprises an insertion space containing the battery pack terminals and allowing the tool terminals to insert to be electrically connected to the battery pack terminals, and the insertion space forms the jointing cavity allowing the tool terminals to be electrically connected to the battery pack terminals.

In one of the embodiments, the battery pack comprises a pack bottom and a pack cover connected to the pack bottom, the pack cover comprises a top surface and a boss convexly disposed from the top surface, the boss comprises an upper surface vertical to the matching surface and a pair of side surfaces connected to the upper surface and the top surface, and the insertion space is formed by concaving one or more surfaces of the upper surface, the matching surface and the side surfaces toward an inner cavity of the battery pack.

In one of the embodiments, the sealing structure is attached to the one or more surfaces forming the insertion space, and after the battery pack is inserted and matched with the high-pressure washer, the insertion space is located in a region defined by the sealing structure, and the sealing structure is capable of hermetically isolating the insertion space from the outside.

In one of the embodiments, the sealing structure is attached to one or more surfaces of the base, and after the battery pack is inserted and matched with the high-pressure washer, the insertion space is located in a region defined by the sealing structure, and the sealing structure is capable of hermetically isolating the insertion space from the outside.

In one of the embodiments, the battery pack terminals at least partially and outward convexly extend on the jointing surface, the housing comprises a jointing space containing the tool terminals and allowing the battery pack terminals to insert to be electrically connected to the tool terminals, and the jointing space forms the jointing cavity allowing the tool terminals to be electrically connected to the battery pack terminals.

In one of the embodiments, the jointing space is formed by inward concaving one or more surfaces defining the base.

In one of the embodiments, the sealing structure is attached to one or more surfaces forming the jointing space, and after the battery pack is inserted and matched with the high-pressure washer, the insertion space is located in a region defined by the sealing structure, and the sealing structure is capable of hermetically isolating the jointing space from the outside.

In one of the embodiments, the housing comprises a battery mounting seat, the battery mounting seat comprises a pair of opposite side parts, the side parts and the base define a battery pack receiving chamber, the battery pack receiving chamber at least has three walls, comprising a base wall and two side walls extending along a direction vertical to a direction of the base wall, the base comprises a top wall extending along a direction vertical to a direction of the jointing surface, the sealing structure is connected on the base wall, the top wall and the side walls, and after the high-pressure washer is inserted and matched with the battery pack, the jointing cavity is located in a region defined by the sealing structure.

In one of the embodiments, the housing comprises a battery mounting seat, the battery mounting seat comprises a pair of opposite side parts, the side parts and the base define a battery pack receiving chamber, the battery pack receiving chamber at least has three walls, comprising a base wall and a pair of side walls extending along a direction vertical to a direction of the base wall, the side parts are disposed with a bottom wall vertical to the side walls, the sealing structure is connected on the bottom wall, the side walls and the base wall, and after the high-pressure washer is inserted and matched with the battery pack, the jointing cavity is located in a region defined by the sealing structure.

In one of the embodiments, the sealing structure is attached to one or more surfaces of the battery pack, and after the battery pack is inserted and matched with the high-pressure washer, the jointing space is located in a region defined by the sealing structure, and the sealing structure is capable of hermetically isolating the jointing space from the outside.

In one of the embodiments, the sealing structure is connected to the matching surface of the battery pack, the sealing structure is attached to at least part of the matching surface, and after the battery pack is inserted and matched with the high-pressure washer, the sealing structure is capable of sealing the jointing cavity.

In one of the embodiments, the battery pack comprises a pack bottom and a pack cover connected to the pack bottom, the pack cover comprises a top surface and a boss convexly disposed from the top surface, the boss comprises an upper surface vertical to the matching surface and a side surface connected to the upper surface and the top surface, the sealing structure is connected on the upper surface, the side surface and the top surface, and after the high-pressure washer is inserted and matched with the battery pack, the jointing cavity is located in a region defined by the sealing structure.

In one of the embodiments, the sealing structure is of a blocky gasket or an elongated sealing strip.

A high-pressure washer combination, comprising a high-pressure washer and a battery pack electrically connected to the high-pressure washer, the high-pressure washer comprises: a housing, comprising a base disposed with a jointing surface; tool terminals, connected to the base; functional parts, comprising a motor disposed in the housing and a pump transporting water flows outward; the battery pack comprises: a matching surface capable of being jointed and matched with the jointing surface; and a battery pack terminal electrically connected to the tool terminals; the high-pressure washer and the battery pack are inserted and matched to form a jointing cavity allowing the tool terminals to be electrically connected to the battery pack terminal, and the jointing cavity is selectively configured on the high-pressure washer or the battery pack; at least one of the high-pressure washer and the battery pack is disposed with a sealing structure, and after the battery pack is inserted and matched with the high-pressure washer, the sealing structure is capable of sealing the jointing cavity.

In one of the embodiments, the tool terminals at least partially and outward convexly extends on the jointing surface, the battery pack comprises an insertion space containing the battery pack terminal and allowing the tool terminals to insert to be electrically connected to the battery pack terminal, and the insertion space forms the jointing cavity allowing the tool terminals to be electrically connected to the battery pack terminal.

In one of the embodiments, the battery pack terminal at least partially and outward convexly extends on the matching surface, the housing comprises a jointing space containing the tool terminals and allowing the battery pack terminal to insert to be electrically connected to the tool terminals and the jointing space forms the jointing cavity allowing the tool terminals to be electrically connected to the battery pack terminals.

In one of the embodiments, the sealing structure is connected to the jointing surface, the sealing structure is attached to part of the jointing surface, and after the battery pack is inserted and matched with the high-pressure washer, the sealing structure is capable of sealing the jointing cavity.

### BRIEF DESCRIPTION OF THE DRAWINGS

FIG. 1 is a space schematic view of a high-pressure washer disclosed in an embodiment of the present disclosure.
FIG. 2 is an internal structural schematic view after a first half housing of the high-pressure washer as shown in FIG. 1 is uncovered.
FIG. 3 is a space schematic view of a self-lock key.
FIG. 4(a) is a sectional view that the self-lock key is in a self-lock state.
FIG. 4(b) is a sectional view when the self-lock key is in an unlocking state and a switch is closed.
FIG. 4(c) is a sectional view when the self-lock key is in an unlocking state and the switch is opened.
FIG. 5(a) is an operation schematic view of single hand operation of a user for unlocking and starting up.
FIG. 5(b) is a schematic view that the user operates the washer after unlocking to work by single hand.
FIG. 6(a) is a front view of the first half housing of the high-pressure washer as shown in FIG. 1.
FIG. 6(b) is a sectional view of FIG. 6(a) along a b-b direction.
FIG. 6(c) is a sectional view of FIG. 6(a) along a c-c direction.
FIG. 7 is an operation schematic view of speed adjusting of the user by one hand operation.
FIG. 8 is a structural schematic view of a sprinkler head of the high-pressure washer as shown in FIG. 1.
FIG. 9 is a test table of a holding comfort level of an operator for machines of different weights.
FIG. 10 is a front view of a pump of the high-pressure washer as shown in FIG. 1.

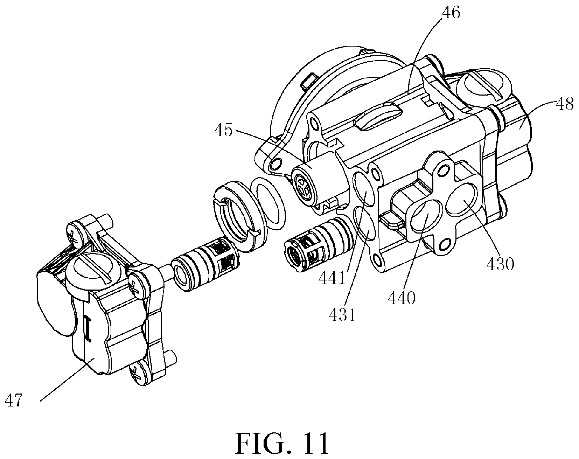

FIG. 11 is a partial exploded view of the pump of the handheld high-pressure washer as shown in FIG. 10.

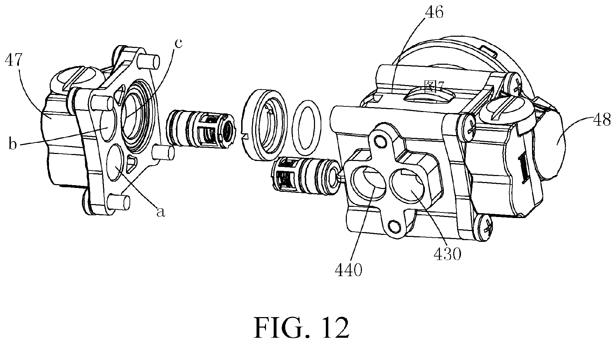

FIG. 12 is a schematic view of the partial exploded view of the pump as shown in FIG. 11 at another visual angle.
FIG. 13 is a structural diagram of a plunger of the pump of the high-pressure washer as shown in FIG. 11
FIG. 14 is a connecting structural diagram of the plunger and an eccentric mechanism of the pump of the high-pressure washer as shown in FIG. 1.
FIG. 15 is a structural diagram of a planetary speed reduction mechanism of the pump of the high-pressure washer as shown in FIG. 1.

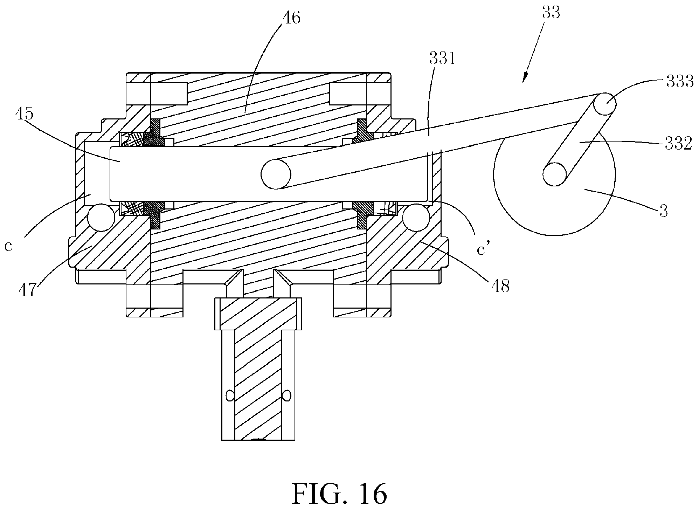

FIG. 16 is a schematic view that a pump is connected to a plunger by a crankshaft connecting rod mechanism in another embodiment of the present disclosure.
FIG. 17 is a schematic diagram that a sprinkler head housing, a nozzle and a universal rod as shown in FIG. 1 are matched and connected.
FIG. 18 is a schematic diagram of a universal rod of a high-pressure washer.
FIG. 19 is a schematic diagram that a sprinkler head housing and a nozzle of a high-pressure washer are matched and connected.
FIG. 20 is a sectional view of a matching and connecting structure of the sprinkler head housing, the nozzle and the universal rod as shown in FIG. 17 along an L-L direction.
FIG. 21 is a structural schematic view of a gun rod accessory.
FIG. 22 is a space diagram that a high-pressure washer is adapted to a water inlet pipe component.
FIG. 23 is a sectional view of a water inlet pipe component without a hook part.
FIG. 24 is an exploded view of a high-pressure washer connected to a water inlet pipe component and a battery pack.
FIG. 25 is a partial exploded view of a high-pressure washer.
FIG. 26 is a space diagram of the battery pack as shown in FIG. 1.
FIG. 27 is a space diagram of one of embodiments that a high-pressure washer is connected to a sealing structure.
FIG. 28 is a space diagram of one of embodiments that a high-pressure washer is connected to a sealing structure.
FIG. 29 is a space diagram of one of embodiments that a battery pack is connected to a sealing structure.

### DETAILED DESCRIPTION

The preferred embodiments of the present disclosure are explained in detail in conjunction with the drawings, such that the advantages and features of the embodiments of the present disclosure are easier to be understood by those skilled in the art, thereby making a clearer definition for a protective scope of the embodiments of the present disclosure.

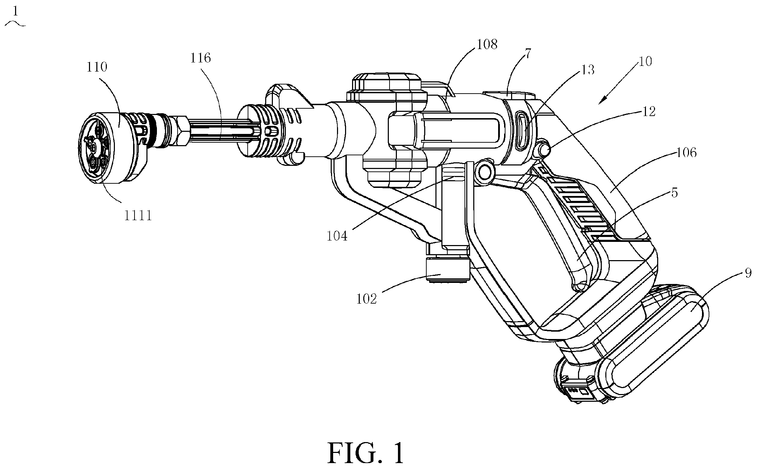

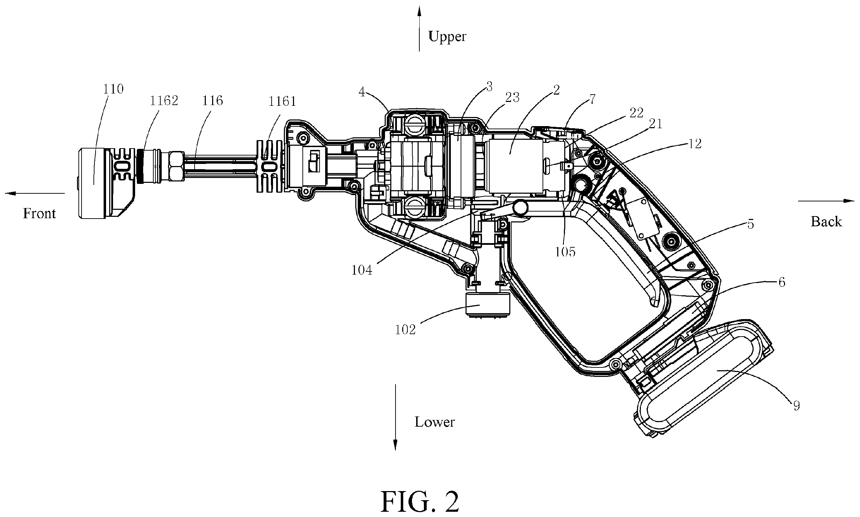

For example, the high-pressure washer 1 as shown in FIGS. 1 and 2 has a housing 10 approximately shaped like a gun. The housing 10 has a handle 106 for holding and a main body portion 108 for storing functional parts. The main body portion 108 has a motor 2, a transmission mechanism 3 connected to the motor 2 and a pump 4 driven by the transmission mechanism therein. In the present embodiment, the housing 10 adopts a left and right half structure, and is formed by connecting a first half housing and a second half housing. For the requirement on portability, the high-pressure washer 1 does not have a water tank for storing a water source per se, but is connected to a water pipe by a water inlet 102 of the main body portion, and the water pipe is then connected to an external water source, which may be a pond, a faucet, etc. In the present embodiment, the high-pressure washer 1 is powered by a battery pack 9 of a direct current power source. The battery pack 9 is disposed on one end of the handle 106 away from the main body portion 108.

In the present embodiment, a starting switch 5 is disposed nearby the handle 106, and is a trigger specifically, and configured to trigger the communication between the external water source and the pump 4 and rotation of the motor 2. Specifically, the high-pressure washer 1 further comprises a water inlet port connected to the pump, a control valve is disposed between the water inlet port and the pump, the starting switch can start the control valve to communicate the water import let with the pump, such that water is pumped into the pump, and of course, in other embodiments, the control valve may be not disposed, and the starting switch 5 is merely disposed to trigger the motor to rotate.

In the present embodiment, the high-pressure washer 1 further comprises a control panel 6. The control panel 6 is electrically connected to the battery pack 9, the motor 2 and the starting switch 5 respectively. A control program is disposed in the control panel 6 and configured to control the battery pack 9 to supply power, the motor 2 to rotate or not and detect the change of a rotary speed of the motor 2. In the present embodiment, the control panel 6 is disposed in a position above the joint between the handle 106 and the battery pack 9. The position of the control panel 6 is away from the sprinkler head 110 to effectively prevent water on the sprinkler head 110 from splashing the control panel 6.

In order to improve use safety, in the present embodiment, the high-pressure washer also has a self-lock function. Continuing to refer to FIG. 1, a self-lock key 12 is disposed on one side of the handle 106. The self-lock key 12 has a locking state and an unlocking state. When the self-lock key 12 is in the locking state, the starting switch 5 is in an OFF position and cannot move to an ON position. When the self-lock key 12 is in the unlocking state, the starting switch 5 can be freely switched between the OFF position and the ON position. The self-lock key 12 is specifically in a boundary between the handle 106 and the main body portion 108 and close to one side of the starting switch 5. Due to the position arrangement of the self-lock key 12, it is favorable to realize single hand operation when the user uses the high-pressure washer 1.

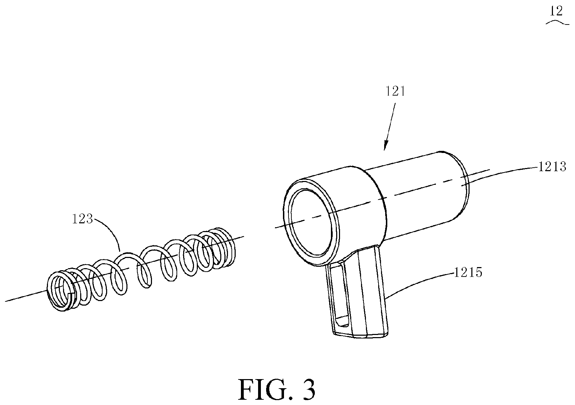

FIG. 3 is a space schematic diagram of the self-lock key 12. The self-lock key 12 comprises a key body part 121, comprising a pressing unit 1213 and a stopping unit 1215 which are disposed at an angle. The pressing unit 1213 has a hollow inner cavity and is columnar integrally. The stopping unit 1215 and one end of the pressing unit 1213 are connected or integrally formed. The stopping unit has a first position causing the self-lock key to be in the locking state and a second position causing the self-lock key to be in the unlocking state. Specifically, the self-lock key 12 further comprises an elastic part 123 abutted against between the housing and the pressing unit, the elastic part 123 acts on the pressing unit 1213, and when the pressing unit is pressed to cause the elastic part to be in a compressed state, the stopping unit is in the second position, and the self-lock key 12 is in the unlocking state. Specifically, the elastic part 123 acts on the pressing unit 1213, when the pressing unit 1214 is pressed, an elastic force of the elastic part 123 is overcome to drive the stopping unit 1215 to move between the locking position and the unlocking position, when the stopping unit is in the first position, the elastic part 123 is in a non-compressed natural state, the self-lock key 12 is in the locking state, when the stopping unit is in the unlocking position, the elastic part 123 is in the compressed state, and the self-lock key 12 is in the unlocking state. In the present embodiment, the elastic part 123 is in the inner cavity of the pressing unit, of course, in other embodiments, the elastic part 123 may also sleeve the pressing unit as long as a restoring force of the pressing unit can be provided.

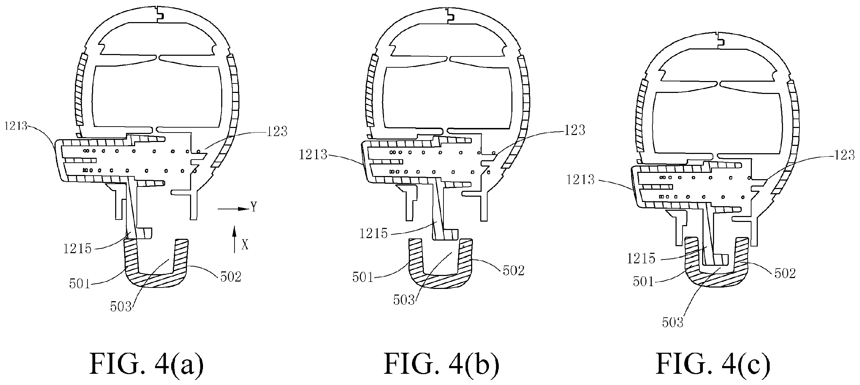

FIG. 4(a) is a sectional view that the self-lock key 12 is in the locking state. In the present embodiment, the starting switch 5 comprises a locking part matched with the stopping unit 1215 of the self-lock key 12, when the self-lock key 12 is in the locking state, the stopping unit 1215 is abutted against the locking part of the starting switch 5, and the starting switch 5 cannot move to the ON position to start the high pressing washer; when the self-lock key 12 is in the unlocking state, the locking part of the starting switch 5 is not abutted by the stopping unit 1215 any more, and the starting switch 5 can move to the ON position to start the high-pressure washer. Specifically, when the self-lock key 12 is in the locking state, the elastic part 1213 is in the non-compressed natural state, the stopping unit 1215 is just abutted against a first locking part 501 of the starting switch 5, and the starting switch 5 cannot move to the ON position along a direction X. FIG. 4(b) is a sectional view that the self-lock key 12 is in the unlocking state. When an external force presses the pressing unit 1213, the elastic part 123 is compressed to a direction Y under an action of the external force and moves for a certain distance, the stopping unit 1215 also moves to the direction Y for the same distance, and the key body part moves along the preset direction Y relative to the housing. Meanwhile, the first locking part 501 of the starting switch 5 is not abutted by the stopping unit 1215 any more, the starting switch 5 can move to the ON position along the direction X, and further trigger an external water source to enter the pump 4 and trigger the motor 2 to rotate. In the present embodiment, the moving direction X of the starting switch 5, that is, the moving direction X of the locking part is approximately vertical to the moving direction Y of the self-lock key 12. Due to such structural design, the user is simply and effectively prevented from triggering unconsciously to start the starting switch 5 to start the high-pressure washer 1.

FIG. 4(c) is a sectional view when the self-lock key 12 is in the unlocking state and the starting switch is started. An inward dent hollow part 503 is formed between the first locking part 501 and a second locking part 502 of the starting switch 5. When the starting switch 5 is in the ON state, the stopping unit 1215 is at least partially in the hollow part 503 of the starting switch 5. After the external force of the pressing unit 1213 is removed, the key body part 121 has a trend of moving along a direction opposite to the direction Y under the action of a restoring force of the elastic part 123. But due to a stopping action of the first locking part 501 of the starting switch 5, the self-lock key 12 cannot move along a direction opposite to the direction Y to be restored to the locking state. Only when the starting switch 5 moves to the position of the OFF state along the direction opposite to the direction X, the stopping unit 1215 is not partially contained in the hollow part 503, the locking part 501 does not stop the stopping unit 1215 from moving to the direction opposite to the direction Y any more, and only then the self-lock key 12 can be restored to the locking state under an action of the elastic part. Due to such structural design, the user can remove self locking by only pressing the self-lock key once when starting the high-pressure washer, such that the self-lock key moves to the unlocking state from the locking state, then under the state that the starting switch 5 is triggered to start the high-pressure washer 1, the self-lock key 12 cannot be automatically restored to the self-lock state. The self-lock key 12 can also be automatically restored to the locking state only when the starting switch 5 is restored to the OFF state.

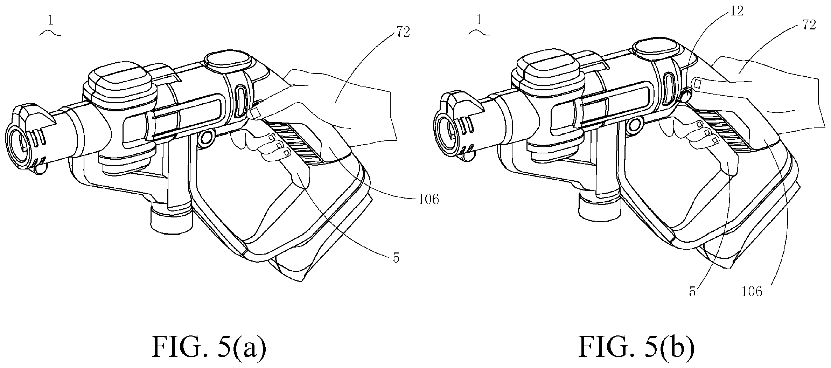

FIG. 5(a) is a specific operation schematic diagram of starting the high-pressure washer 1. The high-pressure washer 1 is started by two actions, firstly, the self-lock key 12 is unlocked, and then the starting switch 5 is triggered. The user places the thumb of one hand 72 on one side of the handle 106, and extends the other four fingers from the other side of the handle 106 to touch the starting switch 5, so as to just hold the handle 106 with a palm part. When the high-pressure washer 1 is started, the thumb applies a pressure to the pressing unit 1213 to convert the self-lock key 12 from the locking state of FIG. 4(a) to the unlocking state of FIG. 4(b). After the self-lock key 12 is in the unlocking state, the starting switch 5 is extruded by the other four fingers, such that the starting switch 5 moves to a direction of the handle and is converted to the ON state of the starting switch in FIG. 4(c) from the OFF state of the starting switch in FIG. 4(b). After the high-pressure washer 1 is started, the thumb of the single hand 72 of the user may not press the self-lock key 12 any more, but needs to keep the starting switch to be in the ON position always. A state schematic view is as shown in FIG. 5(b). Of course, the thumb of the single hand 72 of the user may also continue to place on the self-lock key 12. When the high-pressure washer 1 needs to be closed, the user only needs to loose the four fingers to restore the starting switch 5 to the OFF position. In the process of restoring the starting switch 5 to the OFF position, a first wall 501 moves along a direction opposite to the direction X, and under the action of the restoring force of the elastic part 123, the stopping unit 1215 is automatically restored to the self-lock state of FIG. 4(a) from the unlocking state of FIG. 4(c).

In order to more accord with ergonomics and improve the comfort level when the user operates with one hand, a width of the handle 106 is smaller than 35mm, the furthest path between the starting switch 5 and the handle 106 is smaller than 25mm, preferable, the width of the handle 106 is 30mm, and the furthest path between the starting switch 5 and the handle 106 is 20mm.

In the present embodiment, the handle 106 and the main body portion 108 are disposed at an angle. The range of an included angle between a middle axis of the handle 106 and a middle axis of the main body portion 108 is between 20° and 60°. In other optional embodiments, the handle 106 may also be vertically disposed basically. In the present embodiment, the handle 106 is located on the tail of the whole machine, and in other optional embodiments, the handle 106 may also be located in the middle of the whole machine.

In the present embodiment, the motor 2 further comprises a front end part 23 opposite to the pump 4 and a rear end part 22 disposed opposite to the front end part 23, the front end part 23 of the motor 2 extends out of an output shaft, the rear end part 22 is connected to a fan (not shown), the motor 2 further comprises a motor shell disposed on the periphery of the motor 2, the motor shell 201 is disposed with a first opening in a position of the front end part 23, and the motor shell is disposed with a second opening in a position of the rear end part 22. The housing 10 is disposed with a first air inlet 104 in a position close to the first opening, the first opening is communicated with the first air inlet 104, the housing 10 is disposed with an air outlet 13 in a position close to the fan, the motor 2 drives the fan to rotate, a generated cooling airflow inflows from the first air inlet and the first opening in sequence, passes by the interior of the motor 2, and outward outflows from the air outlet 13, and a first cooling passage for cooling the motor is formed between the first air inlet 104 and the air outlet 13. Preferably, a plurality of first openings and second openings (not shown) are disposed and are uniformly and circumferentially disposed in a front end surface and a rear end surface at an interval. It should be noted that the "close" in the present embodiment can be understood that such element is disposed right above the other element, and can also be slantly below or above the other element, or disposed in a peripheral direction of the other element.

Continuing to refer to FIGS. 1 and 2, in the present embodiment, the first air inlet 104 is disposed in the first half housing and the second half housing and symmetric about a connecting surface of the first half housing and the second half housing, and the air outlet 13 is disposed in the first half housing and the second half housing and symmetric about a connecting surface of the first half housing and the second half housing. Due to such arrangement, the circulation of airflows is more smooth, greater attractive effect is achieved by symmetric arrangement, and heat generated by rotation of the motor 2 may be dissipated outside the housing 10 by the air outlet 13.

In the present embodiment, the fan is disposed in the motor shell 201, the motor shell 201 is disposed with air holes 21 at an interval in peripheral positions of the fan, and the air holes 21 are communicated with the air outlet 13. Preferably, the air holes 21 are multiple elongated openings, are uniformly disposed in the motor shell at an interval and extend along a peripheral direction of the fan, and in other embodiments, the fan may not be disposed in the motor shell. Specifically, the fan is a centrifugal fan, when the motor drives the fan to rotate, the centrifugal fan blows out the airflows in a radial direction from the fan center to the fan in a radial direction, and the airflows pass by the air holes 21 disposed in the peripheral direction and outflow outward from the air outlet 13.

Preferably, due to a mounting position of the motor 2, an opening direction of two oppositely disposed air holes 21 is vertical to a connecting surface of the left and right half housings, and the air outlet 13 is disposed right above the air holes 21. In this way, the air outlet is located in the middle position of the left and right half housings, and the airflow passage is shorter, thereby being convenient for the airflows to flow to the air outlet 13 from the air holes 21 and causing the structure to be symmetric and the layout to be reasonable.

In the present embodiment, a second air inlet 105 communicated with the outside is disposed close to the lower end of the rear end of the motor on the housing 10 of the high-pressure washer 1, the airflows flow by the second opening from the second air inlet 105 and then pass by the rear end part of the motor 2 to cool parts on the rear end of the motor 2, and finally outflow from the air outlet 13 under driving of the fan, and a second cooling passage for cooling the motor 2 is formed between the second air inlet 105 and the air outlet 13. In the present embodiment, the motor 2 adopts a brush motor, the airflows inflowing from the second air inlet 105 further flow by the position of a carbon brush to cool the carbon brush, thereby effectively prolonging the service life of the carbon brush.

In the present embodiment, the inner wall of the housing 10 is inward convexly disposed with a first partition plate, the first partition plate abuts against the outer wall of the motor shell in a peripheral direction, the first partition plate is disposed between the second air inlet 105 and the air outlet 13 in an axial direction of the motor, the first partition plate divides the airflows flowing out of the air holes 21 from the airflows inflowing from the second air inlet, such that the airflows flowing out the air holes 21 do not interfere with the airflows inflowing from the second air inlet 105, thereby ensuring a radiating effect.

Further, the inner wall of the housing 10 is inward and convexly disposed with a second partition plate, the second partition plate abuts against the outer wall of the motor housing in a peripheral direction, the second partition plate is disposed between the first air inlet 104 and the air outlet 13 in an axial direction of the motor, the second partition plate stops the airflows inflowing from the second air inlet 104 from flowing to the air outlet 13 from the periphery of the motor shell, such that the airflows inflowing from the second air inlet 104 pass by the interior of the motor 2 from an opening of the front end surface in a concentrating manner and outflow from the air outlet 13, thereby enhancing the radiating effect for a rotor in the motor.

The high-pressure washer 1 cleans by spraying water, and use working conditions thereof comprise a condition of spray splashing. In order to prevent the spray from entering the housing 10 from the air inlet and the air outlet, in such embodiment, structures of the first air inlet 104 and the air outlet 13 are labyrinth structures, the second air inlet 105 is disposed close to a connecting position between the starting switch 5 and the housing, and when the switch is mounted on the handheld high-pressure washer, the second air inlet 105 is shielded by the switch to prevent spray splashing. In the present embodiment, the second air inlet 105 is disposed in a connecting position between the starting switch 5 and the housing 10, an orthogonal projection of the starting switch 5 on a plane of the second air inlet 105 covers the second air inlet 105, a clearance exists between the second air inlet and the starting switch 5, and when the starting switch 5 is in the ON position of starting the handheld high-pressure washer, the starting switch 5 shields the second air inlet, and the clearance is smallest. Due to the above arrangement, the starting switch can shield the second air inlet 105, and the clearance is the smallest under the ON state of the starting switch, spray is prevented from being splashed into the housing by the second air inlet, and a waterproof function is realized under the premise of ensuring the radiating effect.

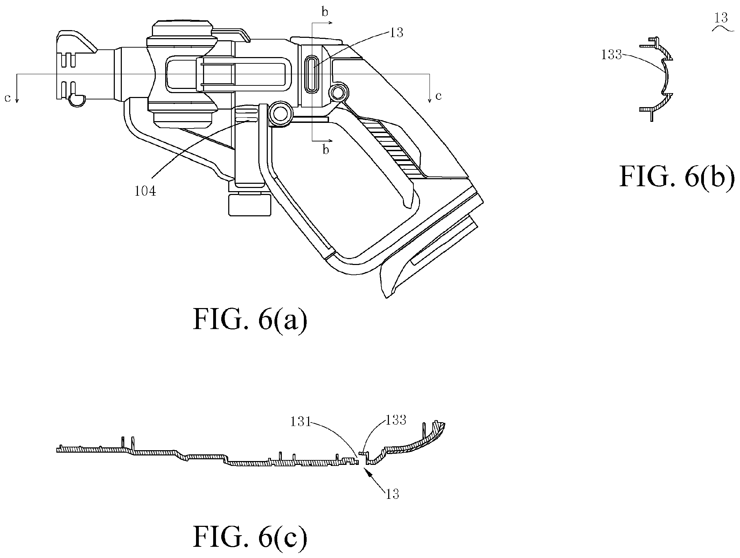

FIG. 6(a) is a front view of the first half housing of the high-pressure washer as shown in FIG. 1, FIG. 6(b) is a sectional view of an air inlet 13 in FIG. 6(a) along a b-b direction, and FIG. 6(c) is a sectional view of the air inlet 13 in FIG. 6(a) along a c-c direction. In combination with FIGS. 6(b) and 6(c), the air outlet 13 is specifically an air outlet groove formed by inward concaving a radiating part of the housing 10 for a certain distance. An extending direction of the air outlet groove is vertical to an axial direction of the motor. The bottom of the air outlet groove has a stopping plate 133, a clearance 131 is formed between one side of the stopping plate 133 close to the motor in the extending direction of the air outlet groove and the housing 10, and the other side away from the motor in the extending direction of the air outlet groove and the housing 10 are connected into a whole. Heat generated by the motor flows to the outside from the clearance 131. As shown in FIG. 6(c), an opening direction of the housing and a direction of the first air inlet are different and are disposed at an angle. In the present embodiment, an internal concaving direction of the air outlet groove and the opening direction of the clearance are disposed at an angle of 90°. Of course, the angle between the internal concaving direction of the groove and the opening direction of the clearance may also be set to be other values, such as 60°, 120°, etc.

In the present embodiment, the first air inlet 104 has a similar structure to the air outlet 13, the first air inlet 104 is specifically an air inlet groove formed by internally concaving the housing 10 in a position of forming the air hole for a certain distance, an extending direction of the air inlet groove is parallel with an axial direction of the motor and located below the motor, the bottom of the air inlet groove has a stopping plate, one side of the stopping plate away from the motor in an extending direction of the air inlet groove is connected to the housing, and a clearance is formed between the other side of the stopping plate close to the motor in an extending direction of the air inlet groove and the housing 10. In the present embodiment, the first air inlet 14 comprises two air inlet grooves, the amount of the air outlet groove is one, and two opposite sides of the stopping plate of one air inlet groove of the first air inlet close to the motor in the extending direction of the air inlet groove are both unconnected to the housing.

In other embodiments, the number of the air inlet grooves or air outlet grooves of the first air inlet and the air outlet may be more, each air inlet groove or air outlet groove is disposed in parallel, the bottom of each air inlet groove or air outlet groove has a stopping plate, wherein one side of only one air inlet groove or air outlet groove away from the motor in the extending direction is connected to the housing, and the two opposite sides of multiple air inlet grooves or air outlet grooves close to the motor in the extending direction are both unconnected to the housing.

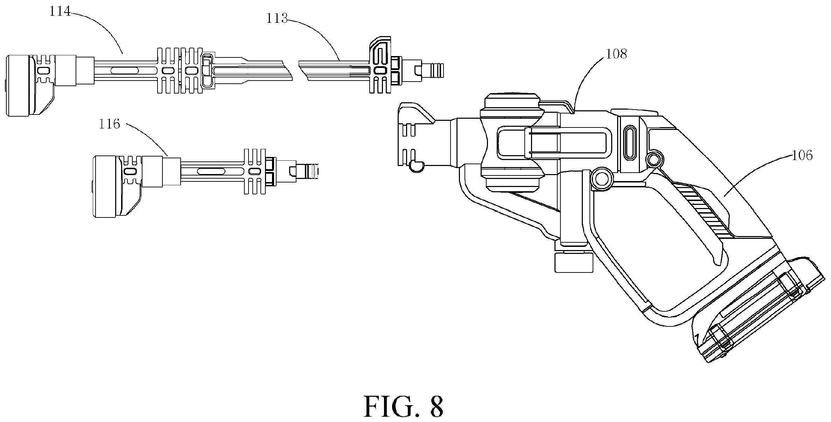

As shown in FIG. 8, as one of the embodiments of the present disclosure, the handheld high-pressure washer comprises at least two gun rod accessories, and specifically comprises a short gun accessory 116 and a long gun accessory 114, one of which can be mounted on the main body portion 108. The long gun accessory 114 is longer than the short gun accessory 116 in a longitudinal extending direction. As shown in FIG. 1, the main body portion 108 of the handheld high-pressure washer 1 is externally connected to the short gun accessory 116, and of course, the main body portion 108 of the handheld high-pressure washer 1 may also be connected to the long gun accessory 114. In the present embodiment, the long gun accessory 114 is formed by connecting the short gun accessory 116 to a prolonging gun 113. In another embodiment, the long gun accessory and the short gun accessory are made into an integral telescopic gun rod accessory (not shown), and the telescopic gun rod accessory has a first length gun rod formed under a stretching state and a second length gun rod formed under a compressed state.

As shown in FIGS. 1, 2 and 7, in the present embodiment, the high-pressure washer 1 also has a speed regulating element 7 adjusting a rotary speed of the motor 2. The speed adjusting element 7 is electrically connected to a control unit 6, and the control unit 6 controls the change of the rotary speed of the motor 2 according to a speed adjusting instruction of the speed adjusting element 7. In such embodiment, the control unit 6 adjusts a duty ratio of the motor 2 to adjust the rotary speed of the motor 2, that is, adjust the rotary speed of the motor by a PWM adjusting circuit. The change of the rotary speed of the motor 2 will cause periodic change of movement of the pump 4, thereby changing water outlet pressure of the high-pressure washer 1. In other embodiments, the speed adjusting element may also adjust the pressure of a liquid flow output by the pump by controlling the area of an outlet section of the pump.

In the present embodiment, the speed adjusting element 7 is a gear speed adjusting element specifically, and the gear speed adjusting element comprises two speed gears, which are a high speed gear and a low speed gear respectively. Therefore, the gear speed adjusting element is an operation part having two operation positions. Of course, the speed adjusting element 7 may also be an operation part comprising multiple operation positions, wherein the multiple operation positions correspond to different speed gears. In other embodiments, the speed adjusting element may also be set to be three or more operation parts, which respectively correspond to different speed gears, and respective operation parts are selectively operated to switch different speed gears.

In the present embodiment, the high-pressure washer 1 has different working modes according to different types of gun rod accessories connected thereon, and the water outlet pressures corresponding to the high speed gear or low speed gear under different working modes are also different.

In the present embodiment, the handheld high-pressure washer 1 has two working modes, when the main body portion 108 is connected to the long gun accessory 114, the handheld high-pressure washer 1 is in a first working mode, and when the main body portion 108 is connected to the short gun accessory 116, the handheld high-pressure washer 1 is in a second working mode. The speed adjusting range of the speed adjusting element 7 under the first working mode is different from that of the speed adjusting element 7 under the second working mode. Specifically, the water outlet pressure corresponding to the high speed gear of the high-pressure washer 1 under the first working mode is different from the water outlet pressure corresponding to the high speed gear of the high-pressure washer 1 under the second working mode; and the water outlet pressure corresponding to the low speed gear of the high-pressure washer 1 under the first working mode is different from the water outlet pressure corresponding to the low speed gear of the high-pressure washer 1 under the second working mode.

Wherein, the telescopic gun rod accessory (not shown) has a first length gun rod formed under the stretching state and a second length gun rod formed under the compressed state. In the present disclosure, a length of the first length gun rod in an axial direction is longer than that of the second gun rod, the first length gun rod may also be understood as the long gun accessory connected to the main body portion under the first working mode, and the second length gun rod may also be understood as the short gun accessory connected to the main body portion under the second working mode. Therefore it can be understood that when the main body portion 108 is connected to the first length gun rod, the handheld high-pressure washer 1 is in the first working mode, and when the main body portion 108 is connected to the second length gun rod, the handheld high-pressure washer 1 is in the second working mode. A speed adjusting range of the speed adjusting element 7 under the first working mode is different from a speed adjusting range of the speed adjusting element 7 under the second working mode. The water outlet pressure corresponding to the high speed gear when the first length gun rod is connected to the main body portion is different from the water outlet pressure corresponding to the high speed gear when the second length gun rod is connected to the main body portion. The water outlet pressure corresponding to the low speed gear when the first length gun rod is connected to the main body portion is different from the water outlet pressure corresponding to the low speed gear when the second length gun rod is connected to the main body portion.

When the handheld high-pressure washer is in the first working mode, the speed adjusting range of the speed adjusting element may be 0.6Mpa-10Mpa, and the handheld high-pressure washer is in the second working mode, the speed adjusting range of the speed adjusting element may be 0.2Mpa-0.69MPa.

When the handheld high-pressure washer 1 is in the first working mode, the control unit 6 controls the motor to be under the low speed gear on the speed adjusting element 7, and the water outlet pressure output outward is 0.6Mpa-2MPa, and when the handheld high-pressure washer 1 is in the second working mode, the control unit 6 controls the motor to be under the low speed gear on the speed adjusting element 7, and the water outlet pressure output outward is 0.2Mpa-0.55MPa.

Specifically, when the handheld high-pressure washer 1 is connected to the short gun accessory 116, the handheld high-pressure washer 1 is in the second working mode, the water pressure of the high-pressure washer 1 corresponding to the high speed gear is 0.65MPa; the water pressure of the high-pressure washer corresponding to the low speed gear is 0.4MPa; when the handheld high-pressure washer 1 is connected to the long gun accessory 114, the handheld high-pressure washer 1 is in the first working mode, the water pressure of the high-pressure washer 1 corresponding to the high speed gear is 6MPa; and the water pressure of the high-pressure washer 1 corresponding to the low speed gear is 1.4MPa. In other embodiments, the water pressures corresponding to the high speed gear and the low speed gear can also be other parameter values. The handheld high-pressure washer 1 has 4 different water outlet pressure ranges, and can meet different use demands, and the use scenarios are expanded.

The handheld high-pressure washer 1 as shown in FIGS. 1 and 2 comprises a housing 10 approximately shaped like a gun, functional parts disposed in the housing 10 and a starting switch 5 disposed on the housing 10 and configured to control the handheld high-pressure washer 1 to be in an ON state or OFF state. Wherein the housing 10 has a handle 106 for holding, a main body portion 108 disposed at an angle relative to the handle 106 and a water outlet part for spraying water flows outward. In the present embodiment, the housing 10 adopts a left and right half structure, and is formed by connecting a first half housing and a second half housing. The functional parts are stored in the main body portion 108. When the starting switch 5 disposed on the housing 10 is operated, cleaning fluid supplied into the main body portion 108 is discharged out of the head of the water outlet part to clean a target object.

The sitting type high-pressure washers on the market are larger in size and weight, and are troublesome to carry when switched in respective working scenarios. For example, in family cleaning, if windows, a lane, steps and an automobile need to be cleaned one by one, then the whole machine needs to be carried among different locations back and forth. In the embodiment of the present disclosure, the high-pressure washer aims at the portable handheld high-pressure washer 1. In consideration of the requirement on portability, the high-pressure washer 1 does not have a water tank for storing a water source per se, but is connected to a water pipe (not shown) by a water inlet of the main body portion 108, and the water pipe (not shown) is then connected to an external water source, which may be provided by a pond, a faucet, or a container device similar to a water tank or cylinder. The working scenarios of the handheld high-pressure washer 1 mainly comprise family cleaning and outdoor activities. In order to meet the requirement on portability, a relationship among the weight of the whole machine, a working water pressure, a working water flow, effective cleaning efficiency, continuous cleaning duration, etc., need to be balanced.

In the embodiment of the present disclosure, the handheld high-pressure washer 1 is powered by adopting direct current, and a direct current power source is a battery pack 9. The battery pack 9 is disposed on one end of the handle 106 away from the main body portion 108. The functional parts comprise a motor 2 disposed in the housing 10, a pump 4 driven by the motor 2 to outward transport the water flows and a transmission mechanism 3 connected between the motor 2 and the pump 4. Wherein the functional parts are driven by energy provided by the battery pack 9, the larger the weight of the functional parts is, the larger the request for the electric power provided by the battery pack 9 is, and the larger the weight of the battery pack 9 is.

In one embodiment, the weight of the functional parts is smaller than or equal to 2500g, and the weight of the single battery pack 9 is smaller than or equal to 1500g; and in another embodiment, the weight of the functional parts is smaller than or equal to 1200g, and the weight of the single battery pack 9 is smaller than or equal to 1000g. Wherein, the weight of the battery pack 9 is decided by the amount and configuration of the battery pack 9. In the embodiment of the present disclosure, the amount of the battery pack 9 is set to be one or more, and a rated voltage of the battery pack 9 is 18-56V. In on executable embodiment, the amount of the battery pack is one, and when the battery pack 9 is configured to have the rated voltage of 18V and the rated capacity of 2Ah, the weight of the battery pack 9 is 360g. Of course, in other embodiments, according to different requirements of the handheld high-pressure washer 1 on the cleaning performance, the rated voltage of the battery pack 9 may also be 36V or 42V, and the rated capacity of the battery pack 9 may also be 1.5Ah or 4Ah, at this point, since the configuration of the battery pack 9 is different, the weight of the battery pack 9 is also adjusted slightly. Further, in the embodiment of the present disclosure, the battery pack 9 is a detachable and chargeable lithium battery pack, and the lithium battery pack is at least adaptively connected to direct current tools of different types, and the purpose that the direct current tools of different types share the battery pack 9 is realized to reduce a use cost of the user. It should be noted that the battery pack 9 may also be a nickel-metal hydride battery or nickel-chromium battery, etc., instead of the lithium battery.

Of course, besides the weights of the functional parts and the battery pack 9, the weight of the whole machine is also affected by the weights of other parts. In one embodiment, the total weight of other parts is smaller than or equal to 500g, and more preferably, the total weight of other parts is smaller than or equal to 400g or 300g. The lighter whole machine weight is an important standard for balancing whether the handheld high-pressure washer 1 meets the portability condition. If the weight of the machine is too large, with increased operation time of the machine secured by an operator, a discomfort feeling of the operator will be increased, and experience of the operator is also reduced greatly. As shown in the table of FIG. 3, the machines of different weights are used and experienced by different operators, it should be noted that the data as shown in FIG. 3 are average values obtained by testing of multiple times with the machines of different weights handheld by each operator in different time buckets, in a testing state, the machine is in the ON state, and the holding time is a time node when the operator feels uncomfortable. From the data in the table of FIG. 3, it can be obtained that when the weight of the machine is larger than or equal to 1kg and smaller than or equal to 2kg, the holding time of the operator is longer; when the weight of the machine is larger than or equal to 2kg and smaller than or equal to 6kg, the holding time of the operator is reduced slightly; and when the weight of the machine is larger than 6kg, the holding time of the operator is obviously shortened. Therefore, in the aspect of operation, the smaller whole machine weight is also an important factor affecting the continuous cleaning work of the handheld high-pressure washer 1. It should be noted that the whole machine weight should be understood as the total weight after the battery pack 9 is adaptively connected to the housing 10 except for the weights of the water pipe and water.

The handheld high-pressure washer 1 is suitable for many working scenarios, including cleaning of balconies, lanes, outdoor desks and chairs, automobiles, bicycles, garages, pets, garden tools, windows, pools, outdoor steps, etc., and different working scenarios have different requirements on a working water pressure and working water flow outward output by the handheld high-pressure washer 1. Wherein, the working water pressure is a capacity of dirty cleaning, under the constant working water flow, the larger the working water pressure is, the larger an impact force of the water flows to a target object of a unit area is, and the faster a peeling rate of the dirty from the surface of the target object is. According to different target objects to be cleaned, the required working water pressures are also changed; the working water flow is the efficiency of dirty cleaning, under the constant working water pressure, the larger the working water flow is, the shorter the time for cleaning the target object is. It should be noted that the above constant working water flow and constant working water pressure can be both understood as the minimal values matched with the corresponding working water pressure or working water flow for cleaning the target object.

Duration time of the battery pack 9 refers to the time that the battery pack 9 can maintain normal working of the handheld high pressure cleaning 1. Wherein, the duration of the battery pack 9 is not only related to the self configuration of the battery pack 9, but also affected by the working mode of the handheld high-pressure washer 1. For the same battery pack of the same capacity, when the working water pressure used when the handheld high-pressure washer 1 works is high and the working water flow is also large or one of the working water pressure or working water flow is larger, then compared with the handheld high-pressure washer with both smaller working water pressure and working water flow, the duration of the battery pack is shortened. For the handheld high-pressure washer provided by the embodiment of the present discourse, the outward output working water pressure is 0.2Mpa-10Mpa, and the outward output working water flow is 1.5L/Min to 8L/Min.

The whole machine weight of the direct current handheld high-pressure washer 1 is mainly decided by the weights of the functional parts and the battery pack 9. The weight of the functional parts is mainly decided by the weights of the motor 2 and the pump 4. In the embodiment of the present disclosure, the pump 4 is disposed with a pump body and a plunger, and the plunger is used as a reciprocating motion component contained in the pump body. The rotational motion of the motor 2 is converted into reciprocating motion by the transmission mechanism 3, and the transmission mechanism 3 is located between the motor 2 and the pump 4.

The amount of the plungers of the pump of the high-pressure washer may be two or more. In one embodiment, the pump 4 is a single-plunger pump of a small size, and the single-plunger pump 4 comprises a pump body 46 and a single plunger 45 disposed in the pump body 46. The single plunger 45 is used as the reciprocating motion component contained in the pump body 46 to freely reciprocate. Wherein, the rotational motion of the motor 2 is converted into reciprocating motion of the plunger 45 by the transmission mechanism 3. The transmission mechanism 3 is connected between the motor 2 and the pump 4.

Compared with a multi-plunger pump, the single-plunger pump only has one high pressure chamber, the pump absorbs water in one half of period and discharges water in the other half of period in one period of reciprocating motion, that is to say, the single-plunger pump does not pump water in half of each period. Therefore, the single-plunger pump has the problem of small water discharge and cannot continuously spray water. The rotary speed of the motor needs to be improved to certain range, such that the water absorbed in the other half of period is discharged in the whole period, however, the fluctuation of the water outlet pressure of the pump is caused to be very large, which needs vary large power and necessarily consumes too much energy. In order to overcome the above problem and ensure an optimal ratio among the weight of the whole machine, a range of the working water pressure, a range of the working water flow, and the continuous cleaning duration under direct current powering, in the embodiment of the present disclosure, there is provided a single-plunger pump applied to the handheld high-pressure washer 1, not only is continuous water pumping realized, but also the weight of the whole machine is lighter, the consumed motor power is less, and the powering time of the battery pack 9 is long.

As shown in FIGS. 4 to 6, in the present embodiment, the single-plunger pump 4 further comprises a water inlet 430 and a water outlet 440 disposed in the pump body 46, and a high pressure chamber connected to the water inlet 430 and the water outlet 440. The high pressure chamber comprises a first high pressure chamber 47 and a second high pressure chamber 48 connected to both ends of the pump body 46, and the water inlet 430 and the water outlet 440 are respectively communicated with the first high pressure chamber 47 and the second high pressure chamber 48. In order to enable the handheld high-pressure washer to be smaller and more portable, it is necessary to consider an arrangement relationship between the pump 4 and the motor 2 in the housing. In order for convenience in description, the front, back, upper and lower directions as shown in FIG. 2 are taken the front, back, upper and lower directions, the direction vertical to the paper surface of FIG. 2 is a width direction of the housing, but the above definition is merely intended for explanation and should be understood as a limitation to the embodiment of the present disclosure. In the present embodiment, a rotary shaft of the motor 2 is disposed along a front and back direction, and the pump 4 is disposed right ahead of the motor 2. In order to enable lengths of the functional parts in the front and back direction to be small as much as possible, the pump 4 is disposed along a direction vertical to the rotary shaft of the motor, and when the rotary shaft of the motor 2 is in a horizontal position, the plunger 45 is in a vertical state along the upper and lower direction, and one side of the pump 4 close to the motor has an opening that is configured to be connected to the rotary shaft of the motor to drive the plunger 45 to reciprocate. When the handheld high-pressure washer is in the normal use state, the first high pressure chamber 47 and the second high pressure chamber 48 are disposed on upper and lower ends of the pump body 46, and the pump 4 is disposed in the housing 10 along the upper and lower direction. Due to the above arrangement manner, the length of the handheld high-pressure washer 1 is smallest in the front and back direction, its gravity center is closer to the holding part of the handle 101, the operation is comfortable, and the structure is compact.

The pump body 46 is disposed with water inlet branches, water outlet branches and a plunger hole penetrating through the pump body 46, the plunger 45 is disposed in the plunger hole, the water inlet branches (431 and 432) are communicated with the water inlet 430, and the water outlet branches (441 and 442) are communicated with the water outlet 440, and the water inlet branch and the water outlet branch 441 are both communicated with the first high pressure chamber 47 and the second high pressure chamber 48.

The transmission mechanism 3 drives both ends of the plunger 45 to reciprocate in the first high pressure chamber 47 and the second high pressure chamber 48. Under driving of the transmission mechanism 3, the two tail ends of the plunger 45 reciprocate in the first high pressure chamber 47 and the second high pressure chamber 48, the plunger 45 alternately extrudes the first high pressure chamber 47 and the second high pressure chamber 48 in the reciprocating motion process to enable the pump 4 to continuously pump water out, and the water pumping efficiency is doubled compared with the plunge pump of single high pressure chamber. It is ensured that one high pressure chamber of the pump is in the extruded state in one period always, thereby realizing continuous water pumping.

Specifically, the plunger 45 is a cylinder extending along a length direction, is configured to pressurize water, and is disposed along an upper and lower direction of the high-pressure washer as shown in FIG. 2, the length extending direction of the plunger 45 is respectively vertical to an opening direction of the water inlet 430 and an opening direction of the water outlet 440, the two ends of the plunger 45 respectively extend into the first high pressure chamber 47 and the second high pressure chamber 48, and the plunger 45 is driven to reciprocate in the first high pressure chamber 47 and the second high pressure chamber 48 along the length direction. Preferably, the pump body 46 is integrally formed, such that the problem of assembling of multiple parts is avoided and water leakage is difficult to occur. Of course, in other embodiments, the pump body 46 may also be formed by splicing multiple parts.

The first pressure chamber 47 and the second high pressure chamber 48 are respectively connected to the water inlet 430 and the water outlet 440. Specifically, the first pressure chamber 47 is connected to the water inlet branch 431 and the water outlet branch 441, and the second high pressure chamber 48 is connected to the water inlet branch 432 and connected to the water outlet branch 442. Continuing to refer to FIGS. 5 and 6, the first pressure chamber 47 comprises a water inlet a, a water outlet b and a high pressure cavity c, and the water inlet a and the water outlet b are communicated with the high pressure cavity c. The first high pressure chamber 47 is further disposed with a passage d (not shown), and the passage d enables the water inlet a, the water outlet b and the high pressure cavity c to be communicated. The second high pressure chamber 48 is disposed on the other end opposite to the first pressure chamber 47, and the pressure chamber 47 and the second high pressure chamber 48 are centrally symmetric about the pump body 46. Similarly, the second high pressure chamber 48 comprises a water inlet a' (not shown), a water outlet b' (not shown) and a high pressure cavity c', and the water inlet a' and the water outlet b' are communicated with the high pressure cavity c'.

The arrangement of the high pressure cavity needs to consider the volume and capacity efficiency of the pump. If the high pressure cavity is overlarge, not only is the volume of the pump is increased, but also too much cavities are caused due to the overlarge volume, the capacity efficiency of the high pressure cavity is reduced, the water absorbing capacity is poor, and the corresponding efficiency volume ratio is reduced. Therefore, it is better that the arranged size of the high pressure cavity just contains the two limited positions in the reciprocating process of the plunger. The distance between the two limited positions of the plunger is defined as a stroke of the plunger, in the present embodiment, an aperture of the high pressure cavity c or c' is larger than a diameter of the plunger by 0.5mm-2mm, and the length of the high pressure cavity c or c' in the reciprocating motion direction of the plunger is larger than the stroke of the plunger by 0.5mm-2mm. In the present embodiment, the aperture of the high pressure cavity c or c' is larger than the diameter of the plunger 45 by 1mm, and the length of the high pressure cavity c or c' in the reciprocating motion direction of the plunger is larger than the stroke of the plunger by 1mm.

Preferably, the plunger 45 is made of a metal material, the two tail ends of the plunger 45 are hollow and are filled with a material of smaller density, such that the mass of the plunger is reduced, thereby relieving the problem of vibration of the plunger 45 of the whole machine in the reciprocating motion process, reducing power for thrusting the plunger and reducing energy consumption. In the present embodiment, the filling material is plastic, and resin, or light metal such as aluminum may also be adopted in other embodiments.

The stroke and diameter as well as the times of reciprocating motion of the pump 4 decide the flow of the pump. In order to explain a relationship among the parameters of the pump in detail, specific to the present embodiment, the diameter of the plunger is defined as D (unit mm), the stroke of the plunger is defined as S (unit mm), the reciprocating motion frequency of the plunger is defined as N (rpm), and the flow of the pump is defined as B (unit L/min). Then B=D×S×N×k, and k represents coefficient (constant number). Therefore, when the reciprocating motion frequency of the pump is constant (the rotary speed of the driving motor is constant), in order to realize predetermined discharge flow B (L/min), the diameter D needs to be increased but the stroke S needs to be reduced, or the diameter D needs to be reduced but the stroke S needs to be increased.

However, the larger diameter of the plunger 45 will lead to an increased width of the pump 4, the larger stroke of the plunger leads to the increased length of the pump 4, and under the premise of meeting the preset flow B, how to set the diameter D and stroke S of the plunger decides the volume of the pump 4, which directly affects the portability of the handheld high-pressure washer. Besides, when the diameter is increased, a thrusting area of the plunger 45 is increased, a required thrust force is also increased correspondingly, in order to increase the thrust force, the motor needs larger power (the motor of a larger volume), besides, the pump body receiving a counteraction force must be intensified. In such manner, the width of the handheld high-pressure washer is increased, and the cost is unfavorably increased. In the other aspect, when the stroke S is increased, the motion quantity of the plunger 45 is increased, leading to the increase of the pump 4 in the length direction, besides, under the condition of the unchanged reciprocating frequency of the pump, if the stroke S is increased, a motion speed of the plunger is also increased, and the material with higher wear resistance needs to be used, leading to the increased cost.

In the present embodiment, in order to cause the pressure of the handheld high-pressure washer 1 to be increased in certain range, the rotary speed of the motor 2 is adjustable, that is to say, the reciprocating motion frequency N of the pump 4 is changed in certain range. Specifically, when the reciprocating motion frequency N is increased, a thrust quantity is reduced, the diameter of the plunger 45 needs to be reduced, if the length of the plunger is not increased, the size of the plunger 45 is reduced correspondingly, and the flow B of the pump 4 is reduced. In the other aspect, when the reciprocating motion frequency N is reduced, the thrust quantity is increased, the size of the plunger 45 is increased unfavorably, since the frequency is reduced, the flow of the pump 4 is correspondingly reduced, and the overlow frequency is the reason for generating oscillation, therefore, the too small reciprocating motion frequency is improper. In the other aspect, for the pump 4 with fixed parameters, the discharge flow is not increased along the increase of the reciprocating motion frequency N, but is increased along with the increase of the motion frequency when lower than certain motion frequency, and when higher than certain motion frequency, the discharge flow is not increased obviously but is reduced along the increase of the reciprocating motion frequency N. This is because the pump 4 needs certain water absorbing time in one reciprocating motion period, that is to say, the pump 4 has certain self-priming time, the reciprocating motion period needs to reserve the self-priming time, then the pump 4 can effectively use the volume of the high pressure cavity, if the period is too short, the water absenting time is not enough, and the high pressure cavity of the pump 4 begins to discharge water before filled with water, and the flow is reduced.

Therefore, the size, cost and discharge flow B (L/min) of the pump need to be considered to properly set the diameter D (mm), stroke S (mm) and reciprocating motion frequency N (rpm) of the plunger. In the embodiment of the present disclosure, the inventors obtained the minimal size and cost and enables the discharge flow and pressure of the pump to meet the size parameters of the pump with family cleaning requirements by research of multiple times. The ratio of flow to volume of the pump is defined as the flow volume ratio of the pump, such parameter reflects a relationship between the pumping capacity and the volume of the pump, those skilled in the art all hope the larger flow of the pump to realize the strong higher cleaning capacity, and also hope the smaller volume of the pump to realize greater portability of the handheld high-pressure washer. Therefore, it is better that the flow volume ratio is larger. In the embodiment of the present disclosure, the inventors obtained by the research that the stroke range of the plunger 45 is 3-16mm, and a diameter range of the plunger is 6-16mm. Therefore, the value range of the volume of the pump is 63000mm^3-85000mm^3, and the flow volume ratio is between 1.4-1.9. In the present embodiment, the length of the plunger is 58mm, the stroke of the plunger 45 is 5.4mm, the diameter of the plunger is 12mm, and the obtained maximal flow volume ratio is 1.9. In other optional embodiments, the length of the plunger may select 54mm, 60mm, 62mm, 68mm and 90mm, the stroke of the plunger may select 4mm, 6mm, 8mm, 10mm, 12mm and 14mm, and the diameter of the plunger may select 8mm, 10mm, 14mm and 16mm.

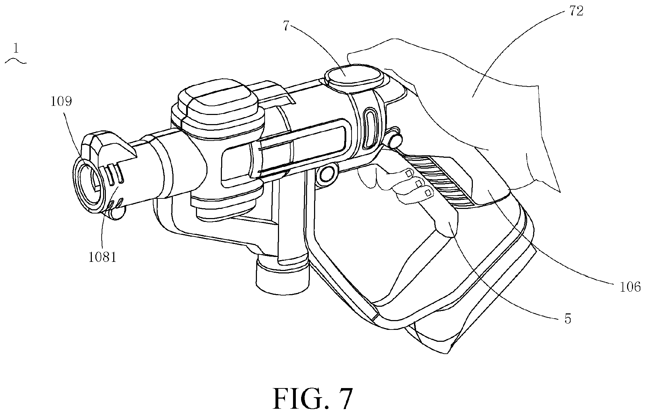

As shown in FIGS. 7 to 9, the transmission mechanism 3 comprises an eccentric mechanism 31, and the eccentric mechanism 31 is configured to convert rotational motion of the motor into reciprocating motion of the plunger. In the present embodiment, on the side part vertical to a length direction vertical of the plunger 45, the plunger 45 is disposed with a connecting part 450 for mounting the eccentric mechanism 31, the eccentric mechanism 31 is connected to the plunger 45 by the connecting part 450, and the connecting part is approximately located in the middle position of the length extending direction of the plunger 45. Specifically, the connecting part 450 is an inward dent concave cavity, and the connecting part 450 is located in the middle position of the plunger 450, of course, an error of +/-5mm is allowed. Preferably, the eccentric mechanism 31 is connected to the connecting part 450 by a connecting bearing 311. The connecting manner is not limited to the connecting bearing 31, and may also include manners such as flat and square matching, spline matching, etc. In other embodiments, the connecting part 450 may also be disposed as a protrusion on the side part of the plunger, and the eccentric mechanism is connected to the protrusion to drive the plunger to reciprocate. Specifically, the protrusion of the side part of the plunger sleeves the connecting bearing, and the eccentric mechanism forms rolling friction with the outer surface of the connecting bearing to drive the plunger to reciprocate.

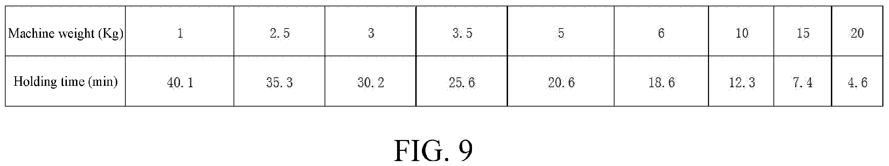

A specific speed reducing mechanism 32 is a gear speed reduction mechanism, and more specifically, the gear speed reduction mechanism is a planetary gear speed reduction mechanism. Referring to FIG. 9, the planetary gear speed reduction mechanism comprises a fixed star gear 320, planetary gears 322 and 324, and an inner gear 321, the fixed star gear 320 is fixedly disposed on an output shaft of the motor, the planetary gears 322 and 324 comprise two gears of the same size, and the planetary gears 322 and 324 are respectively meshed with the fixed star gear 320 and the inner gear 321 and are fixedly connected to the eccentric mechanism 31. When the output shaft of the motor rotates, the planetary gears are driven to perform circumferential motion around the inner gear, thereby driving the eccentric mechanism 31 to perform rotational motion. In the present embodiment, the speed reduction mechanism 32 further comprises a speed reduction box, and one half housing of the speed reduction box is integrally formed by the pump body, such that single design of the speed reduction box is avoided, the speed reduction mechanism is tightly connected to the pump body, the length of the high-pressure washer in the font and back direction is not increased, the high-pressure washer is shorter in the front and back direction, the planetary gears are adopted for speed reduction, the fixed star gear and the output shaft of the motor are fixedly disposed, under the condition of a fixed speed reduction ratio, the volume of the speed reduction mechanism can be minimized, thereby making the high-pressure washer smaller and more portable.

In other embodiments, the transmission mechanism may not be disposed with the speed reduction mechanism, that is, a low speed motor is directly adopted to drive the eccentric mechanism.

In the above embodiment, the plunger 45 is connected to the eccentric mechanism 31, and the plunger 45 is driven by eccentric rotational motion of the eccentric mechanism 31 to linearly reciprocate along the length direction thereof. Of course, the embodiment of the present disclosure is not limited to the connection between the plunger 45 and the eccentric mechanism 31, and the plunger 45 may also be connected to other mechanisms to realize the linear reciprocating motion along the length direction thereof.

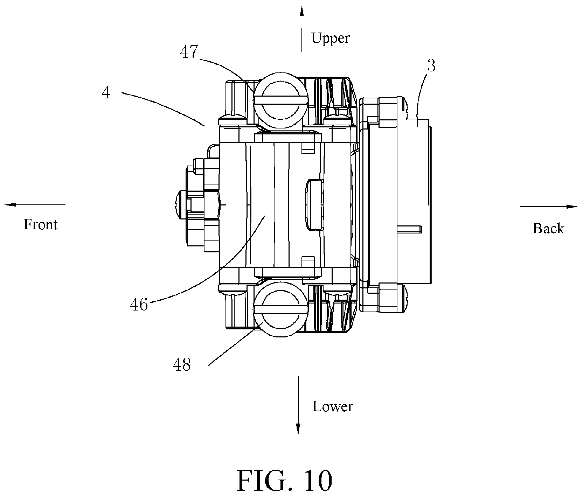

FIG. 10 shows another embodiment. The transmission mechanism specifically comprises a crankshaft connecting mechanism 33, and the plunger 45 is connected to the crankshaft connecting mechanism 33. The crankshaft connecting mechanism 33 comprises a connecting rod 331 and a crankshaft 332 connected to each other. One end of the connecting rod s331 is connected to the crankshaft 332, while the other end of the connecting rod 331 is connected to the plunger 45. While one end of the crankshaft 332 is connected to the connecting rod 331, and the other end of the crankshaft 332 is connected to the transmission mechanism 3. The connecting part between the connecting rod 331 and the crankshaft 332 forms a pivoting point 333, such that the connecting rod 331 and the crankshaft 332 can relatively rotate around the pivoting point 333. As shown in FIG. 10, the crankshaft connecting rod mechanism 33 can convert the rotational motion of the motor into the reciprocating motion of the plunger 45 in the length direction thereof.

Under the condition of a fixed input rotary speed range of the pump and a mated rotation-reciprocating converting structure, compared with the low rotary speed motor directly adopting an output rotary speed within the input rotary speed range, the weight and the volume of the functional parts can be reduced obviously by adopting reasonable matching of a speed reduction structure and a high rotary speed small motor. In the present embodiment, a no load rotary speed of the motor 2 is larger than or equal to 10000rpm or 12000rpm or 15000rpm or 20000rpm, and a no load output rotary speed of the speed reduction structure of the transmission mechanism 3 is smaller than or equal to 3000rpm or 2500rpm or 2200rpm or 2100rpm or 2000rpm. A speed reduction ratio of the speed reduction structure of the transmission mechanism 3 is between 12:1 and 3:1, for example, 10:1, 8:1, 7:1, 6:1, 5:1, 4:1, etc.

Compared with the handheld high-pressure washer directly using the low rotary speed motor to drive the pump for water pumping, the handheld high-pressure washer driving the single-plunger pump for water pumping by the high rotary speed small motor and the gear speed reduction mechanism is effectively optimized in the weight of both the motor and the pump, thereby reducing the whole machine weight of the handheld high-pressure washer and improving the portability of the handheld high-pressure washer 1. Specifically, the weight of the functional parts is about 800g, a rated power of the motor is 135watt-200watt, and the motor is driven by a power source of the battery pack. The amount of the battery pack is one. A rated voltage of the battery pack is 18V, a rated capacity 2Ah, the weight of the battery pack is about 360g, therefore, in the embodiment of the present disclosure, the weight range of the handheld high-pressure washer is 1.5kg-2.5kg. Under the weight range of the whole machine, the working water pressure outward output by the handheld high-pressure washer is 0.2Mpa-6Mpa, the working water flow outward output is 1.5L/Min-8L/Min, at this point, when the handheld high-pressure washer is in the ON state, the time that the water outlet continuously sprays water flows outward is 10-60min. In one embodiment, the working water pressure of the handheld high-pressure washer is 2.1MPa, the working water flow output outward is 2.5L/Min, the amount of the battery pack is one, the rated voltage of the batter pack is 18V, the rated capacity is 2Ah, at this point, when the handheld high-pressure washer is in the ON state, the time that the water outlet continuously sprays water flows outward is 10min, and the whole machine weight of the handheld high-pressure washer may be 1.7kg. Of course, the working water pressure output outward by the handheld high-pressure washer may also be 0.3Mpa, 0.4Mpa, 0.5Mpa, 0.8Mpa, 1Mpa, 1.2Mpa, 1.4Mpa, 1.5Mpa, 1.8Mpa, 2Mpa, 2.2Mpa, 2.4Mpa, 2.5Mpa, 2.6Mpa, 2.8Mpa, 3.0Mpa, 3.3Mpa, 3.5Mpa, 3.6Mpa, 3.8Mpa, 4Mpa, 4.5Mpa, 5Mpa, 5.5Mpa, 6Mpa, etc. The working water flow output outward by the handheld high-pressure washer may also be 1.5L/Min, 1.6L/Min, 1.7 L/Min, 1.8L/Min, 1.9L/Min, 2L/Min, 2.2L/Min, 2.4L/Min, 2.5L/Min, 2.6L/Min, 2.8L/Min, 3.0L/Min, 3.2L/Min, 3.3L/Min, 3.4L/Min, 3.5L/Min, 3.8L/Min, 4L/Min, 4.5L/Min, 5L/Min, 5.5L/Min, 6L/Min, 6.5L/Min, 7L/Min, 7.5L/Min, etc.

In another embodiment, the pump is a tri-plunger pump (not shown), the tri-plunger pump (not shown) comprises a pump body and three plungers disposed in the pump body, the three plungers reciprocate at a phase difference of 120 degrees. The tri-plunger pump is driven by the high speed small motor, and the weight of the handheld high-pressure washer is optimized. Wherein the rotational motion of the motor is converted into the reciprocating motion of the plunger by the transmission mechanism. Compared with the handheld high-pressure washer of the single-plunger pump, in the tri-plunger pump, the water pumping efficiency is improved a lot, of course, the three plungers reciprocate, a sliding resistance between the three plungers and the pump body is larger, energy consumption will be increased, and the motor of a larger rated power is required to overcome the sliding resistance of the three plungers. While compared with the low rotary speed motor of larger size and weight, the embodiment of the present disclosure obviously reduces the weight and the volume of the functional parts by reasonable matching of the speed reduction mechanism and the high rotary speed small motor. In the present embodiment, the transmission mechanism comprises a gear speed reduction mechanism and a swash plate mechanism disposed between the gear speed reduction mechanism and the pump body. A no load rotary speed of the motor 2 is larger than or equal to 10000rpm or 12000rpm or 15000rpm or 20000rpm, and a no load output rotary speed of the speed reduction structure of the transmission mechanism 3 is smaller than or equal to 3000rpm or 2500rpm or 2200rpm or 2100rpm or 2000rpm. A speed reduction ratio of the speed reduction structure of the transmission mechanism 3 is between 12:1 and 3:1, for example, 10:1, 8:1, 7:1, 6:1, 5:1, 4:1, etc. The swash plate mechanism drives the fixing connecting structure to enable the plunger to reciprocate in the pump body. Due to such design, the heavier low speed large motor is replaced with the lighter high speed small motor and gear speed reduction mechanism, to reduce the weight of the functional parts.

Specifically, in the embodiment, since the motor of larger power is required to drive the tri-plunger pump to consistently pump water, therefore, a rated power of the motor is 300watt to 500watt, the weight of the functional parts is slightly improved and smaller than or equal to 2500g, and the weight of the single battery pack is smaller than or equal to 1500g. The whole machine weight range of the handheld high-pressure washer is 3kg to 5kg. In the present embodiment, under such whole machine weight range, the working water pressure outward output by the handheld high-pressure washer is 3Mpa-10Mpa, the working water flow outward output is 3L/Min-8L/Min, at this point, when the handheld high-pressure washer is in the ON state, the time that the water outlet continuously sprays water flows outward is 10-120min. Preferably, the rated power of the motor is 360watt, and the weight of the functional parts is 1300g. The amount of the battery packs is two, the rated voltage of the motor is 18V, the rated capacity is 2Ah, and the two battery packs are serially connected and provide a drive power source for the motor together. The total weight of the two battery packs is smaller than or equal to 750g, and the whole machine weight of the handheld high-pressure washer is 3kg.

In one embodiment, the working water pressure outward output by handheld high-pressure washer of the tri-plunger pump is 3.3Mpa, the working water flow outward output is 4L/Min, at this point, when the handheld high-pressure washer is in the ON state, the time that the water outlet continuously sprays water flows outward is ?-?min. Of course, the working water pressure output outward by the handheld high-pressure washer may also be 3Mpa, 3.2Mpa, 3.4Mpa, 3.6Mpa, 3.8Mpa, 4Mpa, 4.2Mpa, 4.4Mpa, 4.6Mpa, 4.8Mpa, 5Mpa, 5.5Mpa, 5.8Mpa, 6Mpa, 6.2Mpa, 6.4Mpa, 6.6Mpa, 6.8Mpa, 7Mpa, 7.5Mpa, 7.8Mpa, 8Mpa, 7Mpa, 8.5Mpa, 9Mpa, 9.5Mpa, etc. The working water flow output outward by the handheld high-pressure washer may also be 3.3L/Min , 3.4 L/Min, 3.6L/Min, 3.8L/Min, 3.9L/Min, 4.1L/Min, 4.2L/Min, 4.4L/Min, 4.5L/Min, 4.6L/Min, 4.8L/Min, 4.9L/Min, 5L/Min, 5.5L/Min, 6L/Min, 6.5 L/Min, 6.8 L/Min, 7L/Min, 7.5 L/Min, 7.8 L/Min, etc.

It should be noted that the handheld high-pressure washer of the single-plunger pump not only can outward output the working water pressure of 0.2Mpa-6Mpa and the working water flow of 1.5L/Min to 3.5L/Min. The working water pressure and working water flow provided in the embodiment of the above single-plunger pump are optimal parameter ranges when the weight range of the whole machine is 1.7kg to 2.5kg. Similarly, the working water pressure and working water flow provided in the embodiment of the handheld high-pressure washer of the tri-plunger pump are optimal parameter ranges when the weight range of the whole machine is 3kg to 5kg.

The effective cleaning efficiency k of the high-pressure washer equals to the working water pressure P multiplied by the working water flow Q. The evaluation on the high-pressure washer depends on the effective cleaning efficiency, the larger the effective cleaning power is, the better the cleaning effect is. However, under the same effective cleaning power, the working water pressure is in inversely proportional to the working water flow, if the cleaning effect is about to be improved, those skilled in the art generally require to increase both, but if both of them are increased, then the power of the motor must be increased, the weight of the whole machine is increased, and the duration time of the battery pack is also reduced, which conflict against the concept of the portable handheld high-pressure washer aimed in the embodiment of the present disclosure. In the embodiment of the present disclosure, after research for multiple times, the inventors found that the cleaning effect of the handheld high-pressure washer not only needs to consider value ranges of the working water pressure and the working water flow, and a ratio of the working water pressure to the working water flow under different working water pressures also needs to be considered.

Specifically, the inventors found that when the working water pressure outward output by the handheld high-pressure washer 1 is large while the working water flow outward output is too small, water flows outward sprayed by the pump 4 make contact with air to be atomized, when the handheld high-pressure washer 1 is configured to clean the family and outdoor furniture, the atomized water vapor cannot be used for the cleaning work at all, and at this point, the handheld high-pressure washer 1 becomes a sprayer. While when the working water pressure outward output by the handheld high-pressure washer 1 is too small while the working water flow outward output is too large, under one condition, the working water pressure reaches a minimal water pressure value required for cleaning the target object, at this point, in one aspect, the working water pressure value is low, the cleaning capacity is poor, dirty cannot be cleaned completely or even is cleaned completely, but the time that the dirty is peeled from the surface of the target object is too long, which greatly consumes the duration time that the battery pack; in the other aspect, the ratio of the working water pressure to the working water flow is improper, and the working water flow is much too larger than the required water amount required by such working water pressure, which causes the waste of a cleaning fluid. If the supplied cleaning fluid does not come from active water (faucet water), but comes from the cleaning fluid stored in a box body, the cleaning fluid in the box body will be consumed in short time. Therefore, the cleaning effect of the handheld high-pressure washer needs to consider the reasonable ratio between the working water pressure and the working water flow.

Further, in the embodiment of the present disclosure, the motor 2 is powered by the battery pack 9, while the electric energy supplied to the motor 2 from the battery pack 9 is limited. Therefore, the inventors found that the when the cleaning effect of the handheld high-pressure washer needs to consider the reasonable ratio of the working water pressure to the working water flow, proper working water flow also needs to be selected according to the working water pressure of different sections and the duration provided by the battery pack. In other words, when the working water pressure is relatively higher, the energy consumption is great per se, at this point, considering that the energy of the battery pack 9 is limited, the working water flow needs to be controlled, to ensure the better cleaning effect on the basis that the corresponding working water flow does not affect the duration working time of the washer under relatively higher working water pressure. For example, when the working water pressure is 9Mpa, the corresponding working water flow of the optimal ratio is 5.1L/Min, 5.2 L/Min , 5.4 L/Min , 5.5L/Min, 5.6L/Min , 6L/Min, 6.5L/Min, 7 L/Min and 8L/Min. While in order to pump the water flows of high water pressure, the power consumption of the functional parts is increased, the continuous working time of the washer has been affected, and in order to prolong the continuous working time of the washer, a sufficient cleaning effect needs to be obtained by a smaller working water flow. Therefore, under the relatively higher working water pressure, the working water flow can select 5.4L/Min. While when the working water pressure is relatively lower, at this point, the restriction to the working water flow can be reduced since under the premise of meeting the better cleaning effect, even though the larger discharge rate is selected among the working water flows of several optimal ratios, the influence on the duration of the battery pack is very slight. For example, when the working water pressure is 3Mpa, the corresponding working water flow of the optimal ratio can be 2.8L/Min or 3L/Min or 3.5L/Min or 4L/Min, under the relatively smaller working water flow, the working water flow can select 4L/Min. Therefore, under such working water pressure, it can be ensured that the corresponding working water flow can completely clean the dirty while the influence on the energy consumption of the battery pack 9 is small.

Further, it needs to be stated that the handheld high-pressure washer 1 in the embodiment of the present disclosure aims at portability, and the whole machine can be operated by handholding. The existing high-pressure washers are relatively single in function, and barely have no other usages expect for the cleaning of some family utensils or outdoor utensils. While in daily life, there are many objects to be cleaned by the user with the water flows, and whether the cleaning function of various different types can be realized by using the same one platform. Specific to such requirement, when bathing pets daily, the inventors found that the pets are cleaned either by shower nozzles used by bathing of people or cleaned by sending to pet stores, and great inconvenience is caused. The inventors also found that when flowers and plants are sprayed and watered daily, other tools are required for operation. While the tools meeting these different functions not only occupy a use space of the user, but also cause more inconvenience to the user. In order to accord with the trend of diversification, the handheld high-pressure washer provided by the embodiment of the present disclosure is very suitable for concentrating the cleaning working condition of spraying and watering and the working condition of family and outdoor utensils on the same platform. Specifically, the handheld high-pressure washer provided by the embodiment of the present disclosure comprises a cleaning mode and a showering mode, wherein the cleaning mode mainly refers to the cleaning on the family and outdoor utensils, for example, the cleaning of windows, balconies, range hoods, garages, moss on house walls, bicycles, garden tools, pools, terrace fences, outdoor deck chairs, sand on swimming equipment, mountain bikes, canoes and kayaks, camping utensils, etc.; and the spraying mode mainly refers to the cleaning of flower watering, showering, for example, flower and plant watering, flowers and trees irrigation, animal bathing, field showering, etc. While specific to different cleaning working conditions, there are different requirements on the working water pressure and working water flow outward output by the handheld high-pressure washer. For example, when the handheld high-pressure washer is configured to spray and water the flowers and plants, if the working water pressure is too high, the flowers will be damaged; when the handheld high-pressure washer 1 is configured to shower and bath animals or shower by people in the wilderness, if the working water pressure is too high, the animals or people will feel uncomfortable due to an impact force of the water flows. Therefore, the inventors felt that the factor for examining the quality of the handheld high-pressure washer also needs to consider different working conditions and the user experience under different working conditions. Therefore, the range of the working water pressure, the range of the working water flow, and the ratio between the working water pressure and the working water flow also need to consider different cleaning working conditions.

Based on the above consideration, when the handheld high-pressure washer 1 is used for the showering mode, the working water pressure outward output is larger than or equal to 0.2Mpa and smaller than 0.6Mpa, and the working water flow outward output is larger than or equal to 1.5L/Min, and smaller than or equal to 8L/Min. Therefore, when in the showering mode, the working water pressure may also be 0.3Mpa, 0.4Mpa, 0.5Mpa, 0.55Mpa, etc.; and the working water flow output outward may also be 1.5L/Min, 1.6L/Min, 1.8L/Min, 2L/Min, 2.6L/Min, 3L/Min, 3.6L/Min , 3.8L/Min, 4L/Min, 4.5L/Min, 5L/Min, 5.5L/Min, 6L/Min, 6.5L/Min, 7L/Min, 8L/Min, etc. Preferably, the working water pressure outward output is 0.2Mpa, the working water flow outward output is 3.5L/Min, and the washer can be configured to water the flowers and grass.

When the handheld high-pressure washer 1 is used for the cleaning mode, the working water pressure outward output is larger than or equal to 0.6Mpa and smaller than 10Mpa, and the working water flow outward output is larger than or equal to 1.5L/Min, and smaller than or equal to 8L/Min. Therefore, when in the cleaning mode, the working water pressure may also be 0.65Mpa, 0.69Mpa, 0.7Mpa, 0.8Mpa, 0.9Mpa, 1Mpa, 1.1Mpa, 1.2Mpa, 1.3Mpa, 1.4Mpa, 1.5Mpa, 1.8Mpa, 2Mpa, 2.2Mpa, 3Mpa, 3.5Mpa, 4Mpa, 4.5Mpa, 5Mpa, 5.5Mpa, 6Mpa, 7Mpa, 8Mpa, 8.5Mpa, 9Mpa, etc.; and the working water flow output outward can also be 1.6L/Min, 1.7L/Min, 1.8L/Min, 1.9 L/Min, 2L/Min, 2.5L/Min, 3L/Min, 3.5L/Min, 4L/Min, 4.5L/Min, 5L/Min, 5.5L/Min, 6L/Min, 6.5L/Min, 7L/Min, 7.5L/Min, 7.8L/Min, etc.

By summarizing the research of the inventors, it can be obtained for the handheld high-pressure washer 1, the ratio between the working water pressure and working water flow is not only affected by different water pressures, but also affected by different working conditions.

Therefore, in the embodiment of the present disclosure, for the portable handheld high-pressure washer 1, under the working water pressures of different ranges, the considering factors for the ratio between the working water pressure and the working water flow are different, and under different working conditions, the considering factors for the ratio between the working water pressure and the working water flow are also different. Specific to the different working water pressure ranges, the ratios between the different working water pressures and the working water flow are provided.

Specifically, specific to the handheld high-pressure washer which outward outputs the working water pressure being larger than or equal to 0.2Mpa, and smaller than 0.6Mpa, the ratio between the outward output working water pressure to the outward output working water flow is 0.025 to 0.18, and the preferable ratio is 0.05 to 0.1. That is, the ratio of the outward output working water pressure to the outward output working water flow may be 0.03, 0.033, 0.035, 0.04, 0.043, 0.048, 0.05, 0.053, 0.06, 0.07, 0.08, 0.09, 0.1, 0.11, 0.12, 0.13, 0.14, 0.15, 0.16, 0.17, etc. For example, the outward output working water pressure of the handheld high-pressure washer is 0.3Mpa, the outward output working water flow of the handheld high-pressure washer is 4L/Min, and at this point, the ratio of the working water pressure to the working water flow is 0.075. The working water pressure is mainly used for flower watering, and such working condition only needs sufficient working water flow without a high pressure.

Specific to the handheld high-pressure washer which outward outputs the working water pressure being larger than or equal to 0.6Mpa, and smaller than 10Mpa, the ratio between the outward output working water pressure to the outward output working water flow is 0.25 to 2.5,. That is, the ratio of the outward output working water pressure to the outward output working water flow may be 0.3, 0.4, 0.5, 0.6, 0.7, 0.8, 0.9, 1.0, 1.1, 1.25, 1.3, 1.35, 1.4, 1.45, 1.5, 1.55, 1.6, 1.65, 1.7, 1.75, 1.8, 1.9, 2.0, 2.1, 2.2, 2.3, 2.4, etc., and preferably 0.4-1.75. For example, the outward output working water pressure of the handheld high-pressure washer is 0.8Mpa, the outward output working water flow of the handheld high-pressure washer is 2L/Min, and at this point, the ratio of the working water pressure to the working water flow is 0.4. Such working water pressure and working water flow may be used for cleaning bicycle chains, and such working condition needs no high pressure to avoid damage to lubricant oil of chains and bearings. The outward output working water pressure of the handheld high-pressure washer is 5Mpa, and the outward output working water flow of the handheld high-pressure washer can be 4.2L/Min, and the ratio of the working water pressure to the working water flow is 1.19, and such working water pressure and working water flow may be used for cleaning automobiles.

It should be noted that the above working water pressure can be designed into a fixed working water pressure value, and may also be designed into multiple gear values according to specific performance requirements and a cost of the handheld high-pressure washer 1. When designed into multiple gear values, the working water pressure may be adjusted to the corresponding gear value in a control manner of knob or button.

In another embodiment of the present disclosure, the handheld high-pressure washer 1 may also be powered by an alternate current power source (not shown). The electric energy is supplied to the functional parts from a commercial power source, and on electric energy supply, the electric quantity is not limited. Therefore, the continuous working time of the handheld high-pressure washer is not limited, but under some working conditions, the power supply of alternate current will sacrifice the portability of the handheld high-pressure washer, for example, an outdoor cleaning working condition.

As shown in FIGS. 1 and 2, the handheld high-pressure washer 1 further comprises a sprinkler head 110, and the sprinkler head 110 is disposed with one or more spraying openings 1111. The one or more spraying openings may be matched with corresponding working water pressures and working water flows to spray the water flows of different types outward. In such embodiment, the handheld high-pressure washer 1 further comprises a gun rod accessory connected between the sprinkler head 110 and the main body portion 108, the gun rod accessory comprises one or a combination of more in a long gun accessory (not shown), a short gun accessory 116 and a telescopic gun rod accessory (not shown). In the present embodiment, the main body portion 108 is connected to the short gun accessory 116, one end 1161 of the short gun accessory 116 is communicated and abutted with the main body portion 108, a water outlet part is formed on the other end 1162 of the gun rod accessory, and the water flows can flow to the other end 1162 of the gun rod accessory from the main body portion 108 under pressurizing of the pump 4, and are outward sprayed by the sprinkler head 110.

As shown in FIGS. 1 and 2, the starting a starting switch 5 is disposed nearby the handle 106, and is a trigger specifically, and configured to trigger the communication between the external water source and the pump 4 and rotation of the motor 2. In the present embodiment, the high-pressure washer 1 further comprises a control panel 6. The control panel 6 is electrically connected to the battery pack 9, the motor 2 and the starting switch 5 respectively. A control program is disposed in the control panel 6 and configured to control the battery pack 9 to supply power, the motor 2 to rotate or not and detect the change of a rotary speed of the motor 2. In the present embodiment, the control panel 6 is disposed in a position above the joint between the handle 106 and the battery pack 9. The position of the control panel 6 is away from the sprinkler head 110 to effectively prevent spray on the sprinkler head 110 from splashing the control panel 6.

The high-pressure washer 1 also has a speed regulating element 7 adjusting a rotary speed of the motor 2. The speed adjusting element 7 is electrically connected to a control unit 6, and the control unit 6 controls the change of the rotary speed of the motor 2 according to a speed adjusting instruction of the speed adjusting element 7. In such embodiment, the control unit 6 adjusts a duty ratio of the motor 2 to adjust the rotary speed of the motor 2, that is, adjust the rotary speed of the motor by a PWM adjusting circuit. The change of the rotary speed of the motor 2 will cause periodic change of movement of the pump 4, thereby changing water outlet pressure of the high-pressure washer 1. In other embodiments, the speed adjusting element may also adjust the pressure of a liquid flow output by the pump by controlling the area of an outlet section of the pump.

The speed adjusting element 7 is set in a manner that when one hand holds the handle 106, one finer on the hand can touch the speed adjusting element 7. Continuing to refer to FIG. 1, the speed adjusting element 7 is disposed on the main body portion 108, and specifically located on the top of the main body portion 108, and in the joint between the main body portion 108 and the handle 106. In other embodiments, the speed adjusting element 7 may also be disposed on the handle 106. Due to the position arrangement of the speed adjusting element 7, it is convenient for the user to realize single hand operation when using the high-pressure washer 1. In the process of the starting the handheld high-pressure washer 1 by the user, if the pressure of the handheld high-pressure washer 1 needs to be adjusted, the user only needs to extend the thumb along a direction of the main body portion 108 and makes contact with the speed adjusting element 7 for pressing. The other four fingers extend from the other side of the handle 106 and make contact with the starting switch 5, and the handle 106 is just secured by a palm part. Preferably, the speed adjusting element 7 is a key type switch, and the speed adjusting element 7 can be pressed to trigger the control unit 6 to send an adjusting unit to the motor 2.

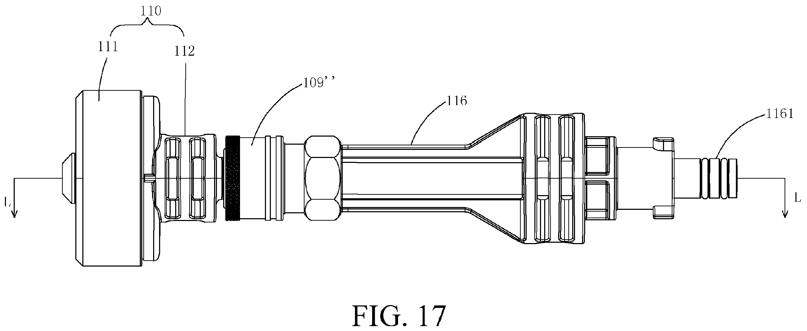

As shown in FIGS. 17 to 20, the present embodiment provides an anti anti-rotation sprinkler head 110, the sprinkler head 110 comprises a sprinkler head housing 112 and a nozzle 111 connected to the sprinkler head housing. The nozzle 111 can operably rotate around a rotary shaft (not shown) relative to the sprinkler head housing 112 to realize that the water flows of different types are sprayed out from the nozzle 111. In the embodiment of the present disclosure, an extending direction of the rotary shaft is defined as the axial direction. Specifically, the nozzle 111 comprises multiple different water outlets 1111 disposed circumferentially, the sprinkler head housing 112 has a water flow passage 1121 therein, one of the multiple different water outlets 1111 may be communicated with the water flow passage 1121, and the nozzle 111 rotates relative to the sprinkler head housing 112 to switch the different water outlets 1111 to spray the water flows of different types. The different types herein may be understood as the water flows of different patterns, and may also be understood as the water flows of different pressures. The water flows may flow to the sprinkler head housing 112 from the housing 10 under pressurizing of the pump 4, and are finally outward sprayed out the nozzle 111. For the existing high-pressure washer 1, if the operator wants to switch the water flows of different types, the operator needs to limit the sprinkler head housing 112 to rotate relative to the housing 10 by one hand and rotate the nozzle 111 with the other hand so as to realize the switching of the water flows of different types. In this process, in order to prevent the high-pressure washer from falling off, generally the machine body of the high-pressure washer 1 needs to be abutted against the body of the operator to provide support. Therefore, in the use process, not only is the operation troublesome, but also the user experience is poor.

In order to improve the comfort level in operation, the present embodiment provides a high-pressure washer 1 capable of switching a water flow type with one hand. In the operation process, if the water flow type is about to be switched, the position of the hand holding the handle 106 does not need to be changed, and the switching of the water flow type can be realized by only rotating the nozzle 111 with the other hand. Specifically, as shown in FIGS. 17 to 19, the sprinkler head housing 112 comprises a base part 1122 and a matching-connecting part 1123 located on one end of the base part 1122, and the matching-connecting part 1123 can be inserted and matched with the water outlet parts 109, 109' and 109" of the housing 10. After the matching-connecting part 1123 is inserted and matched with the water outlet parts 109, 109' and 109", the matching-connecting part 1123 cannot rotate relative to the water outlet part 109, and the water flows are converged to the sprinkler head housing 112 from the water outlet parts 109, 109' and 109" and are outward sprayed from the nozzle 111. Wherein one of the water outlet parts 109, 109' and 109" and the matching-connecting part 1123 is configured as an anti-rotation plug, and the other of the water outlet parts 109, 109' and 109" and the matching-connecting part 1123 is configured as an anti-rotation plugging opening non-rotatably connected to the anti-rotating plug. In the present embodiment, the matching-connecting part 1123 is designed into a manner of the anti-rotation plug extending outward, and the water outlet parts 109, 109' and 109" are designed into a manner of the anti-rotation plugging opening inserted and matched with the anti-rotation plug. Due to such arrangement, the nozzle shell 112 is non-rotatably connected to the water outlet parts 109, 109' and 109", when the sprinkler head 110 needs to be rotated to switch different water outlet types, only the nozzle 111 needs to be rotate with one hand instead of fixing sprinkler head housing 112, and the operation is simple and portable.

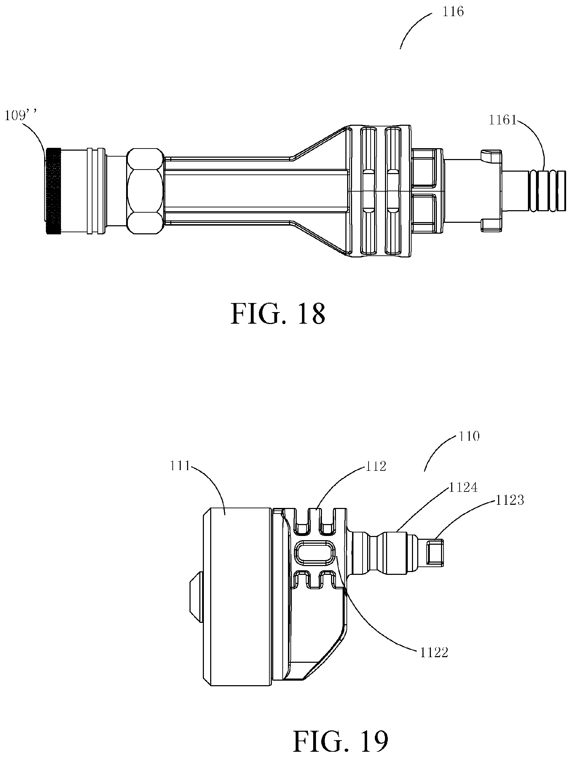

As shown in FIGS. 18 and 19, the anti-rotation plug is a convex non-cylindrical structure, the anti-rotation plug is a non-cylindrical groove, when the matching-connecting part 1123 is inserted and matched with the water outlet parts 109, 109' and 109", since the distance between a non-cylindrical contact surface and a rotary center is different, the matching-connecting part 1123 cannot rotate relative to the water outlet parts 109, 109' and 109". Specifically, the anti-rotation plug is a flat and square structure, and the anti-rotation plugging opening is a flat and square groove adaptive to the flat and square structure. The flat and square structure is in symmetry of 180 degrees, and thus can be mounted bidirectionally. In other words, the ant-rotation plug and the anti-rotation plugging opening can still be connected if the current mounting direction is rotated by 180 degrees. In other embodiments, the anti-rotation plug can also be made to be in symmetry of 90 degrees, to prevent the anti-rotation plug from being matched with the anti-rotation plugging opening from multiple directions. Or the anti-rotation plug can also be made into a petal shape, and anti-rotation plugging opening is made to be a petal groove shape adaptive thereto. Of course, in other embodiments, the anti-rotation plug can also be made into other shapes, such as a polygonal cylinder, and the anti-rotation plugging opening has a groove matched with the above polygonal cylinder.

As one embodiment of the embodiment of the present disclosure, as shown in FIG. 7, the water outlet part 109 is formed on a free end 1081 of the main body portion 108. The water flows flow to the sprinkler head housing 112 from the free end 1081 under pressurizing of the pump 4, and are outward sprayed by the corresponding water outlet 1111 in the nozzle 111. The free end 1081 may be understood as a port for outputting the water flows in the main body portion 108 of the high-pressure washer 1. The matching-connecting part 1123 of the sprinkler head housing 112 and the port of the main body portion 108 for outputting the water flows are non-rotatably matched and connected.

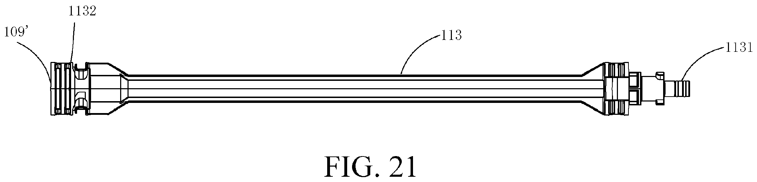

As another embodiment of the present disclosure, in order to provide the water flows of different pressures and realize the cleaning working on the target objects in different regions, the housing 10 further comprises a gun rod accessory connected between the sprinkler head 110 and the main body portion 108, and the gun rod accessory comprises one or a combination of more in a long gun accessory, a short gun accessory and a telescopic accessory. As shown in FIG. 21, the gun rod accessory is a prolonged gun 113. One end 1131 of the prolonged gun 113 is communicated and jointed with the main body portion 108, the water outlet part 109' is formed on the other end 1132 of the prolonged gun 113, and the water flows can flow to the other 1132 of the prolonged rod 113 from the main body portion 108 under pressurizing of the pump 4, and can be outward sprayed by the sprinkler head 110.

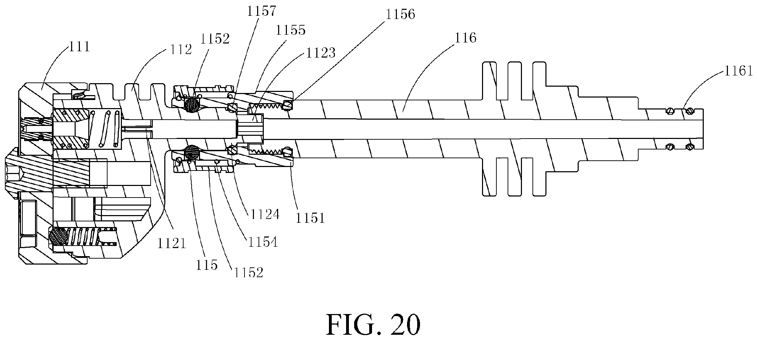

As another embodiment of the present disclosure, as mentioned by the above two embodiments, the high-pressure washer 1 of the embodiment of the present disclosure may not be disposed with the gun rod accessory, and the sprinkler head 110 may be directly connected to the main body portion 108. Of course, the high-pressure washer 1 may also be disposed with the gun rod accessory, and the sprinkler head 110 may be communicated and connected with the main body portion 108 by the gun rod accessory. In order to ensure that the main body portion 108 and/or the gun rod accessory of the high-pressure washer 1 has universality, as shown in FIGS. 18 and 20, the high-pressure washer 1 further comprises a short rod accessory 116 connected between the housing 10 and the sprinkler head 110, and in such embodiment, the short gun accessory may be understood as a universal rod. The universal rod 116 comprises a universal rod head 1161, and the universal rod head 1161 may be directly connected to the main body portion 108 and/or the gun rod accessory. The water outlet part 109' is configured on the universal rod 116, and is disposed opposite to the universal rod head 116. Such design has the benefits that an adaptive part is formed between the sprinkler head 110 and the main body portion 108 and/or the gun rod accessory by the universal rod 106, such that the water outlet part 109" (the anti-rotation plugging opening) is not disposed on the main body portion 108 and/or the gun rod accessory. In other words, due to the universal rod 116, the main body portion 108 and/or the gun rod accessory does not need to be structurally transformed to adapt to the anti-rotation plug of the sprinkler head housing 112, thereby ensuring that the main body portion 108 and/or the gun rod accessory may also be universal with the sprinkler heads of other structures.

As another embodiment of the present disclosure, the sprinkler head housing 112 further comprises a universal connecting part 1124 connected between the base part 1122 and the matching-connecting part 1123. The matching-connecting part 1123 is detachably connected to the universal connecting part 1124, and of course, the universal connecting part 1124 and the base part 1122 may also be disposed to be detachably connected. In the present embodiment, the sprinkler head 110 has a first working mode of being connected to the water outlet parts 109, 109' and 109" by the matching-connecting part 1123 and a second working mode of being directly connected to the main body portion 108 and/or the gun rod accessory by the universal connecting part 1124. Due to such arrangement, under the condition of ensuring the universality of the sprinkler head 110 per se, the working mode of switching the water flow mode by one hand can be further provided. The operator may freely select whether the sprinkler head 110 and the water outlet parts 109, 109' and 109" need to be disposed in an anti-rotation manner according to needs per se. The selection freedom of the operator is stronger.

As shown in FIG. 20, the high-pressure washer 1 further comprises a locking component 115 disposed on the joint between the matching-connecting part 1123 and the water outlet parts 109, 109' and 109", and the locking component 115 has a locking position limiting the sprinkler head 110 from moving in the extending direction of a rotary shaft and a release position capable of realizing separation of the sprinkler head from the water outlet part. By disposing the locking component 115, the axial locking between the sprinkler head housing 112 and the water outlet parts 109, 109' and 109" can be realized to prevent the sprinkler head 110 from axially moving relative to the water outlet parts 109, 109' and 109".

Specifically, the locking component 115 comprises a connector 1151 connected to the water outlet parts 109, 109' and 109", a locking ring 1152 at least partially coating the periphery of the connector 1151 and a plurality of balls 1153. The connector 1151 is in threaded connection with the water outlet parts 109, 109' and 109" to realize detachability. The connector 1151 is disposed with a plurality of ball holes (not shown) for containing the balls 1153. Each ball 1153 is movable relative to the ball hole. Preferably, the plurality of ball holes are uniformly disposed in the peripheral direction of the connector 1151. The locking ring 1152 can axially move relative to the housing 10. Specifically, the locking ring 1152 can axially move to the locking position and the release position relative to the housing 10. The locking position may stop the sprinkler head 110 from axially moving, and the release position can realize the separation of the sprinkler head 110 from the water outlet parts 109, 109' and 109". When the locking ring 1152 moves to the locking position, the inner wall of the locking ring 1152 applies an abutting force to each ball 1153 along a direction vertical to the axial direction, each ball 1153 is promoted to press the universal connecting part 1124 of the sprinkler head housing 112 in a radial direction, and the sprinkler head housing 112 is stopped from moving axially. When the locking ring 1152 moves to the release position, the abutting force applied to each ball 1153 by the inner wall of the locking ring 1152 disappears, the balls 1153 are in the free state, and at this point, the balls 1153 move to a direction deviated from a direction of the universal connecting part 1121 to realize that the connector 1151 and the sprinkler head housing 112 are in a non-abutting state. At this point, the operator can separate the matching-connecting part 1123 of the sprinkler head housing 112 from the corresponding water outlet parts 109, 109' and 109" in the axial direction. Preferably, the locking component 115 further comprises an elastic part 1154 disposed between the locking ring 1152 and the connector 1151, and the elastic part 1154 can realize that the locking ring 1152 is automatically restored to the locking position from the release position. Further, the connector 1151 is further disposed with a limiting bulge 1155, which can backwards abut against the front end of the locking ring 1152, to limit a moving distance of the locking ring 1152. The locking component 115 further comprises a plurality of sealing rings. The sealing rings comprise a first sealing ring 1156 disposed on the front end of the joint between the connector 1151 and the water outlet parts 109, 109' and 109", and a second sealing ring 1157 disposed between the connector 1151 and the sprinkler head housing 112, and the sealing rings are disposed to avoid water leakage. Of course, here only one locking manners of the locking component is listed, the locking component 115 may also be disposed into other structures as long as the sprinkler head housing 112 and the water outlet parts 109, 109' and 109" can be locked axially, and the sprinkler head housing 112 can be separated from the water outlet parts 109, 109' and 109" axially.

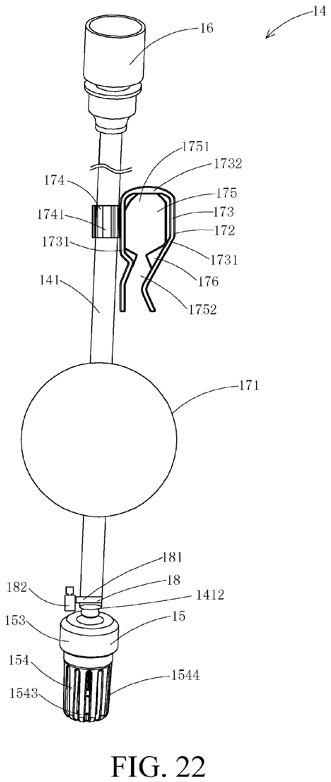

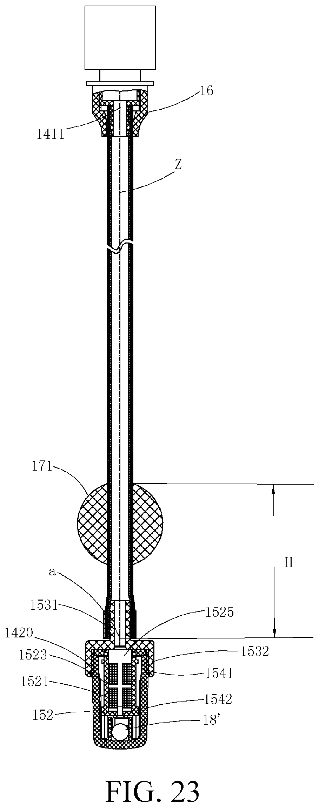

As shown in FIGS. 22 and 23, the present embodiment further discloses a water inlet pipe component 14, configured to be connected to the high-pressure washer 1. That is, the water inlet pipe component 14 is applied to the self-priming high-pressure washer 1. Of course, the water inlet pipe component 14 is also suitable for any other water pumping devices having a water pumping function. The water inlet pipe component 14 is connected to the high-pressure washer 1 to absorb an external water source, and the water source flows by the pump 4 and flows out with certain intensity of pressure by the pump 4. The water inlet pipe component 14 comprises a water pipe 141, an interface part 153 communicated with the water pipe 141, a filter tip component 15 placed in the external water source and a jointing component 16 connected to the high-pressure washer 1.

The water pipe 141 axially extends along a middle axis Z, and comprises a water flow outlet 1411 and a water flow inlet 1412 communicated with the water flow outlet 1411. Wherein the water flow outlet is communicated and connected with a water inlet 102 of the high-pressure washer 1, and the water flow inlet 1412 is connected to the external water source. Usually, a section of the water pipe 141 is round. In the present embodiment, a length of the water pipe is 6m.

The jointing component 16 preferably adopts a fast insertion connector, to be convenient for a user to fast connect the water pipe 141 with the high-pressure washer 1 in an insertion manner.

The interface part 153 comprises a joining part 1531 inserted into the water pipe 141 and a matching-connecting part 1532 connected to the joining part 1531. An outer diameter of the joining part 1531 is set to be round consistent with an inner diameter of the water pipe 141. The joining part 1531 is inserted into the inner side of the water pipe 141 and is fastened with the water pipe 141. The matching-connecting part 1532 is columnar, a cross sectional area of the matching-connecting part 1532 in the radial direction is larger than that of the joining part 1531 in the radial direction, and the inner side of the matching-connecting part 1532 is disposed with continuous internal threads (not shown). In the present embodiment, an interface of the interface part 153 is a universal interface 1420.

As shown in FIGS. 22 and 23, the filter tip component 15 comprises a first filter part 154 and a second filter part 152. In the present embodiment, the first filter part 154 may be understood as a coarse filter part, and the second filter part 152 may be understood as a fine filter part. In other words, the first filter part 154 is mainly configured to filter sundries of a larger size, the second filter part 152 is mainly configured to filter the sundries of a smaller size, and by disposing the first filter part 154 and the second filter part 152, it can be further ensured that the water source pumped in the high-pressure washer 1 has higher cleanliness.

The first filter part 154 comprises an annular part 1541 and a connecting part 1542 located on the lower end of the annular part 1541. The axial length of the connecting part 1542 is longer than the annular part 1541. The outer side of the annular part 1541 is disposed with external threads formed by alternating annular grooves and annular convex ribs. In the present embodiment, the interface part 153 and the first filter part 154 are respectively molded integrally and then assembled together. Specifically, the interface part 153 and the first filter part 154 can be detachably connected by the internal threads of the matching-connecting part 1532 and the external threads of the annular part 1541. The connecting part 1542 comprises a plurality of strip-shaped convex ribs 1543 axially disposed at an interval and groove holes 1544 disposed between adjacent two convex ribs 1543 and hollowed internally and externally. The external water source may enter the water pipe 141 by the groove holes 1544 and then through the second filter part 152. The universal interface 1420 of the interface part 153 is selectively connected to the first filter part 154 and a water source pipeline interface (not shown). When the interface part 153 is connected to the first filter part 154, the groove holes 1544, the universal interface 1420 and the water flow inlet 1412 of the water pipe 141 are communicated with each other. In the present embodiment, the interface part 153 is connected to the first filter part 154 and forms a containing cavity (not shown) containing the second filter part 152. The second filter part 152 is movably connected to the interface part 151. Specifically, the second filter part 152 is disposed independent from the first filter part to facilitate detachment. The second filter part 152 comprises a filter net 1521, a support frame 1523 for supporting the filter net 1521 and an opening 1525 communicated with the water pipe 141. The filter net 1521 is disposed with a plurality of filter holes (not numbered), and the aperture of each filter hole is smaller than a groove clearance of each groove hole 1544.

In the present embodiment, the water inlet pipe component 14 comprises a first working mode of connecting the first filter part 154 to the universal interface 1420 for absorbing the external water source and a second working mode of connecting the water source pipeline interface to the universal interface 1420 for absorbing the external water source as well as a third working mode of separating the interface part 153 and the filter tip component 15 from the water source pipeline and independently connecting the interface part 153 with the external water source. Wherein, the cleanliness of the external water source connected to the water inlet pipe component 14 under the first working mode is smaller than the cleanliness of the external water source connected to the water inlet pipe component 14 under the second working mode.

When the external water source connected to the water inlet pipe component 14 is a pond containing sundries of different sizes (poorer cleanliness), and at this point, the water inlet pipe component 14 is in the first working mode. Under such mode, in one aspect, the external water source can be filtered for the first time by the groove holes 1544 of the first filter part 154, and some larger sundries are filtered; in the other aspect, since a mesh density of the filter net 1521 located in the containing cavity is relatively smaller, the external water source can be finely filtered, further some tiny sundries are further stopped from entering the water pipe, and by disposing the double filer parts (first and second filter parts), the cleanliness of the water source entering the water pipe 141 is further ensured.

When the external water source connected to the water inlet pipe component 14 comes from a water area of higher cleanliness (for example, tap water), the water inlet pipe component 14 provided at this point may not be disposed with the first filter part 154 and the second filter part 152 contained in the containing cavity. The user can directly connect the interface part 153 to the water source pipeline interface (not shown), and the water source pipeline interface may be a garden hose or faucet (not shown). At this point, the water inlet pipe component 14 is enabled to be under the second working mode. Under such mode, when the water source pipeline interface is a garden hose, one end of the garden hose is tightly connected to the faucet of tap water by, and the other end of the garden hose is connected to the interface part 153 of the water inlet pipe component 14, such that the water source may directly enter the water pipe 141 of the water inlet pipe component 14 by the garden hose and reach a water inlet passage of the high-pressure washer 1. Since the garden hose has a certain length per se and the water pipe 141 of the water inlet pipe component 14 also has certain length, by connecting the both, the cleaning range and movability of the high-pressure washer 1 can be enhanced. When the water source pipeline interface is the faucet, an elastic compressive cover (not shown) may be disposed in the interface part 153, the end part of the faucet may be fast inserted and connected with the elastic compressive cover, such that the water source may directly flow into the water pipe by the faucet and enters the high-pressure washer 1.

In addition, the external water source may also be provided by a container device similar to a water tank or cylinder. Under such condition, the interface part 153 is separated from both the filter tip component 15 and the water source pipeline interface, and the interface part 153 may be independently connected to the external water source. At this point, the water inlet pipe component 14 is enabled to be under the third working mode. In other words, the interface part 153 is independently placed in the water tank or the cylinder for water absorbing. The water inlet pipe component 14 provided by the embodiment of the present disclosure may be applied to different water area environments, and portability and operability are obvious.

The water inlet pipe component 14 further comprises a hook part 172, and the hook part 172 detachably sleeves the periphery of the water pipe 141 and comprises a first clamping part 173 and a second clamping part 174 outward convexly extending from the first clamping part 173. The first clamping part 173 comprises two clamping arms 1731 disposed oppositely and a connecting arm 1732 disposed on the top ends of the clamping arms and configured to connect the two clamping arms 173. The free ends of the two clamping arms 1731 are disposed with a bending part respectively to prevent the hook part 172 from being separated from the container device. Further, the pair of clamping arms 1731 and the connecting arm 1732 define a semi-closed clamping space 175 together. The clamping space 175 comprises an expanding region 1751 close to the connecting arm 1732 and a shrinking region 1752 located on the lower ends of the clamping arms 1731 and bent inward. Protrusions 176 are disposed on the opposite inner sides of the two clamping arms 173 in a transitional region from the expanding region 1751 to the shrinking region 1752. When the provided external water source is contained by a container device similar to the water tank or cylinder, the first clamping part 173 can be conveniently clamped on the water tank or the cylinder or other container devices to locate the water pipe 141, the water pipe 141 is prevented from being pulled out of the water surface by external slight pulling, and the problem that the water inlet pipe component 14 cannot normally absorb water is avoided.

The second clamping part 174 comprises a pair of guide-connecting arms 1741 convexly extending from the external surface of one clamping arm 173. Wherein, an extending direction of the guide-connecting arms 1741 is vertical to that of the clamping arm 1731. Similarly, the second clamping part 174 is also in the semi-closed state, and the detachable connection between the second clamping part 174 and the water pipe 141 can be facilitated. The hook part 172 is preferably made of a light color plastic material. The hook part 172 can be disposed in any position of the water pipe 141 according to demands of the user.

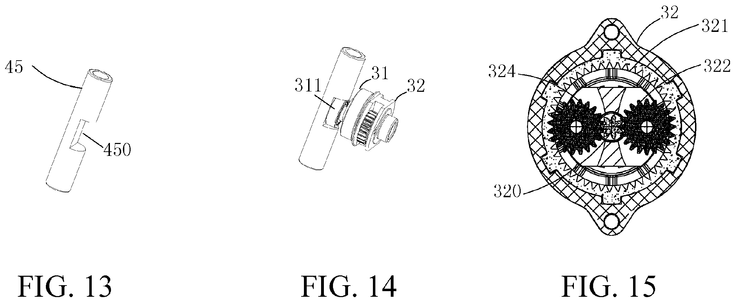

Considering that the filter tip component 15 needs to be immersed in the water source in the normal use process, but the first filter part 154 and the second filter part 152 forming the filter tip component 15 are preferably made of a plastic or rubber material, and are very light in weight, as a result, the filter tip component 15 easily floats on the water surface, and cannot sink into the water source to absorb water, and the use is affected. Therefore, the water inlet pipe component 14 provided by the present embodiment is disposed with a counterweight part 18, such that the gravity of the filter tip component 15 is larger than the buoyancy, and the filter tip component 15 is conveniently immersed into the water source. In the present embodiment, the counterweight part 18 is made of a material difficult to rust, such as stainless steel. In the present embodiment, the counterweight part 18 is disposed in a joint region between the interface part 153 and the water pipe 141. The counterweight part 18 comprises a hoop part 181 circling the periphery of the water pipe 141 and a fastener 182 for fastening the hoop part 181. When the water pressure is very large, the water flows easily support the water pipe 141, as a result, the water pipe 141 is separated from the joining part 1531 of the interface part 153, and the unfavorable phenomenon of water source leakage occurs. While the hoop part 181 of the counterweigh part 18 may provide certain fastening force for the water pipe 141 and the joining part 1531, even when the water pressure is very large, the separation phenomenon between the water pipe 141 and the joining part 1531 will not happen. Of course in other embodiments, as shown in FIG. 14, a counterweight part 18' may also be located in a containing cavity formed by the first filter part 154 and the interface part 153. The counterweight parts 18 and 18' may also be connected to the corresponding element in a mode of connector binding, suspension, etc. Specific structures and arrangement manners of the counterweight parts 18 and 18' are diversified and are not repeated one by one.

As another embodiment of the present disclosure, the water inlet pipe component 14 may not be disposed with the counterweight part, and it can be ensured that the filter tip component 15 is sunk into the water source. Specifically, one or more of the first filter part 154, the second filter part 152 and the interface part 153 may be made of metal or an alloy material. Since these elements have enough gravity per se, after being immersed into the water source, they will not float on the water source.

The cleanliness of the water source under many conditions is low, particularly, when in outdoor use, the user will select a pond nearby to provide the water source. Such water area has massive sludge and sundries settled on the bottom of the water source. When the water inlet pipe component 14 is placed to the water source, the filter tip component 15 is easily sunk to the bottom of the water source. In this way, blockage of the first filter part 154, the second filter part 152 and the universal interface 1420 of the interface part 153 is particularly easily caused, thereby affecting normal use of the high-pressure washer 1, and the user needs to often wash the first filter part 154, the second filter part 152 and the interface part 153.

Specific to the above problems, the water inlet pipe component 14 further comprises a suspension part 171 connected with a water flow inlet 1412 and a water flow outlet 1411 of the water pipe 141. Preferably, the suspension part 171 is made of a plastic foaming material, and the size of the suspension part 171 is large enough to ensure that it has sufficient buoyancy, that is, the buoyancy generated by the suspension part 171 is larger than or equal to the total gravity of the counterweight parts 18 and 18', the interface part 153 and the filter tip component 15, such that when the water pipe component 14 is placed in the external water source, the filter tip component 15 can go deep into the external water source without sinking to the water bottom.

The suspension part 171 may be disposed into any shape, and is selectively mounted in any position of the water pipe 141. Preferably, the suspension part 171 is spherical, the suspension part 171 is disposed on the water pipe 141 of the water inlet pipe component 14 in a penetrating manner, and the user can freely slide the suspension part 171 on the water pipe 141 according to needs to select a proper suspension height. Further, the inventors found that the position that the suspension part 171 is connected to the water pipe 14 affects whether the filter tip component 15 can go deep into the water source without sinking to the water bottom. Besides, under the normal condition, the high-pressure washer 1 needs to clean different regions, therefore, the position where the water inlet pipe component 14 is placed into the external water source needs to be changed, while in the process of pulling the water inlet pipe component 14, the filter tip component 15 easily emerges from the water surface, as a result, in the moving process of the water inlet pipe component 14, the high-pressure washer 1 cannot normally absorb the water source. After research, the inventors found that in the moving process of the water inlet pipe component 14, whether the filter tip component 15 emerges from the water surface is also related to the position of the suspension part 171 in the water pipe 141.

Therefore, in the embodiment, as shown in FIG. 23, the suspension part 171 comprises a top close to the water flow outlet 1411, the middle axis of the water pipe 141 and a plane of the water inlet 1412 have an intersection point a, and a linear distance H between the top of the suspension part 171 and the intersection point a is larger than or equal to 25cm. At this point, not only it is ensured that the filter tip component 15 is not exposed out of the water surface in the pulling and moving process of the water inlet pipe component 14, but also it can be ensured that the filter tip component 15 can be located in a central deep position of the water source without sinking to the water bottom in the normal use process of the water inlet pipe component 14. Preferably, the linear distance H between the top of the suspension part 171 and the intersection point a equals to 35cm. Due to the distance, when the water inlet pipe component 14 is in different water sources, it can be ensured that the filter tip component 15 will not be sunk to the water bottom, and in the pulling and moving process of the water inlet pipe component 14, the filter tip component 15 will not emerge from the water surface. Such design has the benefits that when the operator connects the water inlet pipe component 14 to different external water sources, the user does not need to adjust the position of the suspension part 171 every time. Of course, the distance H can also be 26cm, 28cm, 30cm, 3 cm, 34cm, 36cm, 38cm, 40cm, 50cm, 60cm, 70cm, 80cm, 90cm, 100cm, etc. The suspension part 171 further comprises a coating layer coating the periphery (not shown). Preferably, the color of the coating layer is different from the colors of the water pipe 141 and the water source, so as to be convenient for the user to observe the specific position of the water pipe in the water source.

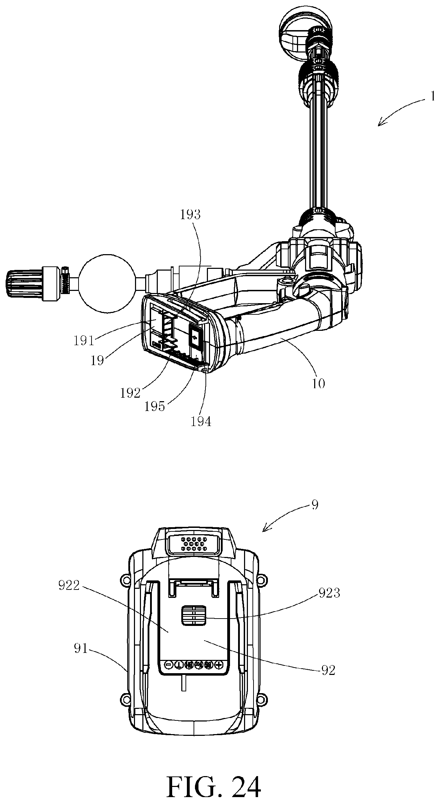

As shown in FIG. 24, the present embodiment discloses a pumping device, the pumping device may be a self-priming handheld high-pressure washer 1, and the high-pressure washer 1 can be electrically connected to the battery pack 9. Of course, the pumping device may also be a self-priming handheld high-pressure washer component, and the high-pressure washer component comprises the high-pressure washer 1 and a battery pack 9 matched and connected with the high-pressure washer 1. In other embodiments, the pumping device is not limited to the high-pressure washer 1 and can be any device having a pumping function.

As shown in FIGS. 24 to 26, the high-pressure washer 1 has a tool connector bar 19 disposed on the bottom of the housing 10 and configured to be electrically connected to the battery pack 9. The tool connector bar 19 comprises a base 191 disposed with a jointing surface 1911 and a plurality of tool terminals 192 fixedly secured in the base. Of course, the housing 10 comprises a base 101 disposed with a jointing surface 1911, which should be understood that the base 191 is detachably connected to the housing 10; or the base 191 and the housing 10 are integrally formed, that is, the base 191 is part of the housing 10, and the jointing surface on the base 191 is part of the outer surface of the housing 10. In other words, the base 191 and the tool terminals 192 are contained in the inner cavity of the housing, and the jointing surface 1911 is formed on the outer surface of the housing 10.

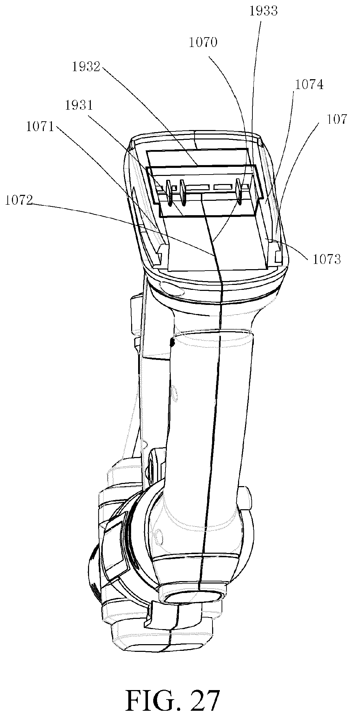

As shown in Figs. 27-28, the housing 10 comprises a battery mounting seat 107, comprising a pair of opposite side parts 1071, and the side parts 1071 and the base 191 define a battery pack receiving chamber 1070, the battery pack receiving chamber 1070 at least has three walls, including a base wall 1072 and two side walls extending along a direction vertical to the base wall 1072. The side parts 1071 are provided with a bottom wall 1074 vertical to the side walls 1073. The base 191 comprises a top wall 1914 extending along a direction to the jointing surface 1911.

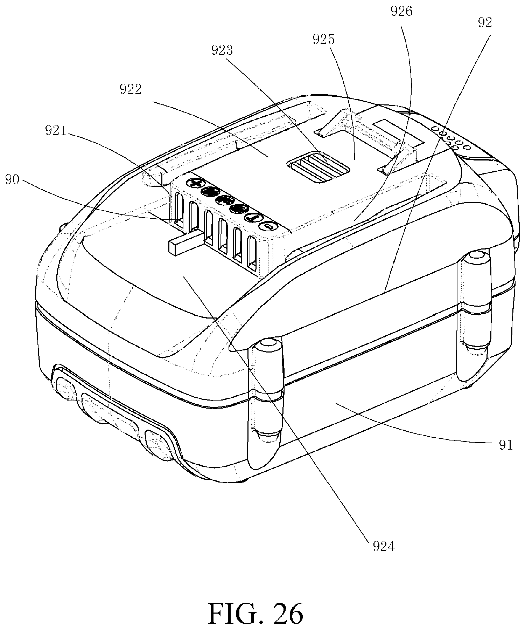

As shown in Figs. 24 and 26, the battery pack 9 comprises a pack bottom 91, a pack cover 92 connected to the pack bottom 91, a battery connector bar (not shown) contained in the pack bottom 91 and the pack cover 92 and a matching surface 921 jointed and matched with the jointing surface 1911. In the present embodiment, the battery connector bar is configured to be contained in a containing space formed after the pack bottom 91 and the pack cover 92 are assembled. The battery connector bar comprises a plurality of battery pack terminals (not shown) electrically connected to the tool terminals 192. The matching surface 921 is formed on the pack cover 92. The pack cover 92 comprises a top surface 924 and a boss 925 is convexly disposed from the top surface 924. The boss 925 comprises an upper surface 922 vertical to the matching surface 921 and a side surface 926 connected to the upper surface 922 and the top surface 924.

The high-pressure washer 1 and the battery pack 9 are inserted and matched to form a jointing cavity allowing the tool terminals 192 to be electrically connected to the battery pack terminals. The jointing cavity is selectively configured on the high-pressure washer 1 or the battery pack 9. At least one of the high-pressure washer 1 and the battery pack 9 is disposed with a sealing structure, after the high-pressure washer 1 and the battery pack 9 are inserted and matched, the sealing structure can seal the jointing cavity, to prevent water from flowing into the battery pack 9 or the high-pressure washer 1 from an opening of the jointing cavity, and the influence on the normal operation of the high-pressure washer 1 is avoided.

As one of the embodiments of the present disclosure, each the tool terminal 192 at least partially extends convexly on the jointing surface 1911. The battery pack 9 comprises an insertion space 90 containing the battery pack terminals and allowing the tool terminals 192 to insert to be electrically connected to the battery pack terminals, and the insertion space 90 forms the above jointing cavity allowing the tool terminals 192 to be electrically connected to the battery pack terminals. The insertion space 90 is formed by concaving one or more surfaces of the upper surface 922, the matching surface 921 and the side surfaces 926 toward an inner cavity of the battery pack. Wherein the sealing structure may be designed to be attached to the one or more surfaces forming the insertion space, and after the battery pack is inserted and matched with the high-pressure washer, the insertion space 90 is located in a region defined by the sealing structure, and the sealing structure is capable of hermetically isolating the insertion space from the outside. Or the sealing structure may be designed to be attached to the one or more surfaces of the base, and after the battery pack is inserted and matched with the high-pressure washer, the insertion space 90 is located in a region defined by the sealing structure, and the sealing structure is capable of hermetically isolating the insertion space from the outside. For example, as shown in FIGS. 24 to 26, the tool terminal 192 is a flake terminal extending outward, the above jointing cavity is the insertion space 90 formed by inward concaving from matching surface 921 of the battery pack 9, and the tool terminals 192 are inserted into the insertion space 90 of the battery pack 9 to be electrically connected to the battery pack terminals of the battery pack 9. Further, after the battery pack 9 is inserted and matched with the high-pressure washer 1, usually there is a matching allowance, that is, the surfaces contacting with each other of the battery pack 9 and the high-pressure washer 1 are impossible to be airtightly attached. The flake tool terminals 192 and an opening of and the insertion space are impossibly in interference matching, that is, there is always a clearance between the flake tool terminal 192 and an opening of the insertion space 90. While the configured sealing structure can prevent outside water from flowing into the battery pack 9 by the clearance between the high-pressure washer 1 and the battery pack 9, to avoid the safety loopholes such as electric leakage and electric shock, caused by short circuit in the battery pack 9. Preferably, the sealing structure is connected to the jointing surface 1911 of the base 191, and the sealing structure is attached to at least part of the jointing surface 1911.

As one of the embodiments of the present disclosure, the battery pack terminal is configured to at least partially convexly extend on the matching surface 921, the housing 10 comprises a jointing space (not shown) containing the tool terminal and allowing the battery pack terminal to insert to be electrically connected to the tool terminal 192, and the jointing space forms the above jointing cavity allowing the tool terminal 192 to be electrically connected to the battery pack terminal. The jointing space is formed by inward concaving one or more surfaces of the base. The sealing structure is attached to the one or more surfaces forming the jointing space, and after the battery pack is inserted and matched with the high-pressure washer, the jointing space is located in a region defined by the sealing structure, and the sealing structure can hermetically isolate the jointing space from the outside. Or the sealing structure is attached to one or more surfaces of the battery pack, after the battery pack is inserted and matched with the high-pressure washer, the jointing space is located in a region defined by the sealing structure, and the sealing structure can hermetically isolate the jointing space from the outside. For example, in one embodiment, the battery pack terminal is a flake terminal (not shown) at least partially outward convexly extending out of the matching surface. One of the forms of the jointing cavity is that the jointing cavity is the jointing space formed by inward concaving from jointing surface 1911 of the housing 10, and the battery pack is inserted into the jointing space of the housing 10 to be electrically connected to the tool terminal 192. Further, after the battery pack 9 is inserted and matched with the high-pressure washer 1, there exists a matching allowance usually, the surfaces contacting with each other of the battery pack 9 and the high-pressure washer 1 are impossible to be airtightly attached. The flake tool terminal and an opening of and the insertion space are impossibly in interference matching, that is, there is always a clearance between the flake tool terminal and an opening of and the insertion space. Preferably, the sealing structure is connected to the jointing surface of the housing, and the sealing structure is attached to at least part of the jointing surface 1911.

Specifically, as shown in FIG. 27, the sealing structure comprises a first gasket 1931 connected on the base wall 1072, and a second gasket 1932 and a third gasket 1933 connected on the top wall 1914, and the first gasket 1931, the second gasket 1932 and the third gasket 1933 are connected end to end. At least part of the third gasket 1933 is located on the side wall 1073, after the high-pressure washer 1 is inserted and matched with the battery pack 9, the jointing cavity is located in a region defined by the first gasket 1931, the second gasket 1932 and the third gasket 1933. It needs to be indicated that the first gasket 1931, the second gasket 1932 and the third gasket 1933 may be an integral strip-shaped structure or a blocky structure. In other words, the three gaskets may be a sealing strip integrally formed, or an integrally formed block. The first, second and third are merely understood as three parts. Of course, a sectional manner can be adopted. The second gasket 1932 may be designed to be partially connected on a bottom wall 1074 of the side part 1071 and partially connected on the side wall 1073 of the side part 1071. The second gasket 1932 can also be designed to be wholly connected on the side wall 1073 of the side part 1071.

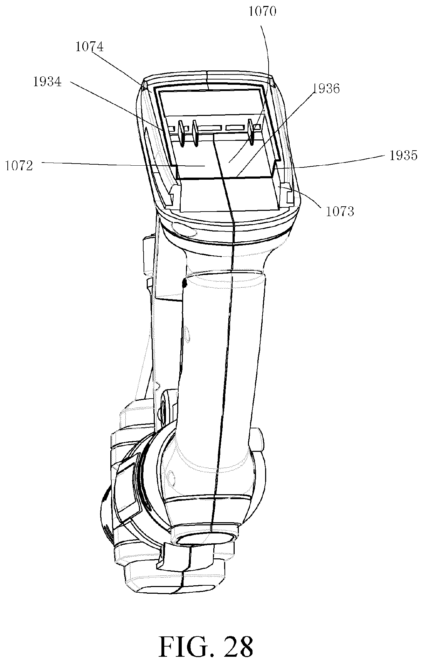

As one of the embodiments of the present disclosure, as shown in FIG. 28, the sealing structure comprises a fourth gasket 1934 connected on the bottom wall 1074, a fifth gasket 1935 connected on the side wall 1073 and a sixth gasket 1936 connected on the base wall 1072. The fourth gasket 1934, the fifth gasket 1935 and the sixth gasket 1936 are connected end to end. After the high-pressure washer 1 is inserted and matched with the battery pack 9, the jointing cavity is located in a region defined by the fourth gasket 1934, the fifth gasket 1935 and the sixth gasket 1936. Similarly, the fourth gasket 1934, the fifth gasket 1935 and the sixth gasket 1936 may be integral. In other words, the three gaskets can be a sealing strip integrally formed or an integrally formed block. The fourth, fifth and sixth are merely understood as three parts. Of course, a sectional manner can be adopted.

As one of the embodiments of the present disclosure, the sealing structure is connected to the matching surface of the battery pack, the sealing structure is attached to at least part of the matching surface 921, and after the battery pack 9 is inserted and matched with the high-pressure washer 1, the sealing structure can seal the jointing cavity.

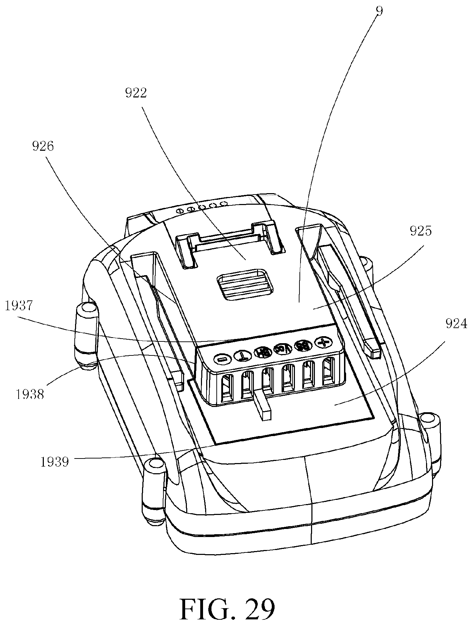

As one of the embodiments of the present disclosure, as shown in FIG. 29, the sealing structure comprises an upper sealing structure 1937 connected on the upper surface 922 of the battery pack 9, a side sealing structure 1938 connected to the side surface 926 of the battery pack 9, and a front sealing structure 1939 connected to the top surface 924 of the battery pack 9 and located on the front end of the boss 925. The upper sealing structure 1937, the side sealing structure 1938 and the front sealing structure 1939 are connected end to end. After the high-pressure washer is inserted and matched with the battery pack, the jointing cavity is located in a region defined by the sealing structure.

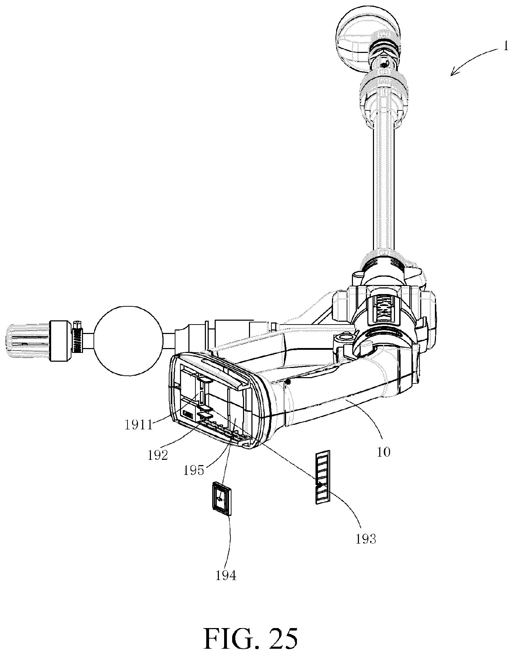

As shown in FIG. 25, in one embodiment, the sealing structure is a blocky gasket 193, which can be one or more of a combination in an elastic deformable soft pad, single face adhesive tape made of a waterproof material, etc. The gasket 193 may be connected to the high-pressure washer 1 and may also be connected to the battery pack 9. Preferably, the gasket 193 is always connected to the high-pressure washer 1. Specifically, the gasket 193 is always connected to the jointing surface 1911 of the housing 10. The gasket 193 may be connected to the jointing surface 1911 by glue adhering, or a fastener or any other proper manners. Such design has the benefits that without changing a composition and structure of the battery pack 9, the battery pack 9 can be applied to multiple other electric tools, and after the battery pack 9 is matched and connected with the high-pressure washer 1, the gasket 193 can prevent water from flowing to the insertion part between the battery pack 9 and the housing 10 from a clearance between the battery pack 9 and the base 191 of the housing 10. Further, a cross sectional area of the gasket 193 in a direction vertical to an insertion direction of the battery pack 9 may be designed to be larger than or equal to that of the jointing surface 1911 in a direction vertical to the insertion direction of the battery pack 9. The gasket 193 is disposed with a plurality of openings (not numbered), to be correspondingly inserted by the tool terminal 192 or the battery pack terminal. Wherein a cross sectional area of the opening in a direction vertical to the insertion direction of the battery pack 9 is adaptive to that of the tool terminal 192 or the battery pack terminal in such direction. Specifically, the cross sectional area of the opening in the direction vertical to the insertion direction of the battery pack may be designed to be smaller than or equal to that of the tool terminal or the battery pack terminal in the direction vertical to the insertion direction of the battery pack.

As shown in FIG. 25, the pack cover 92 is further disposed with an upper surface 922 vertical to the matching surface 921 and opposite to the housing 10. Preferably, the upper surface 922 of the pack cover 92 is disposed with a heat dissipation hole 923.

As shown in FIG. 25, the high-pressure washer 1 further comprises a heat dissipation hole gasket 194 for sealing the heat dissipation hole 923. When the gasket 193 and the heat dissipation hole gasket 194 are both connected to the housing 10, a direction where the heat dissipation hole gasket 194 faces is vertical to a direction where the gasket 193 faces. The heat dissipation hole gasket 194 is located right above the heat dissipation hole 923 and contained in a containing groove 195 disposed in the bottom of the housing 10. Further, the outer surface of the heat dissipation hole gasket s194 at least partially goes beyond a surface 101 on the bottom of the housing 10, and such design has the benefits that in the process that the battery pack 9 is inserted into the housing 10, the heat dissipation hole gasket 194 slightly going beyond the bottom surface 101 can be extruded to be elastically deformed, in one aspect, it is ensured that the heat dissipation hole gasket 194 totally seals the heat dissipation hole 923; and in the other aspect, it is ensured that the battery pack 9 is smoothly inserted with the housing 10. In addition, the size of the heat dissipation hole gasket 194 is not smaller than the size of the heat dissipation hole 923, to totally block the heat dissipation hole 923, and further ensure the waterproof effect. Of course, in other embodiments, the heat dissipation hole gasket 194 my be directly disposed on the battery pack 9.

The heat dissipation hole gasket 194 may also select the single face adhesive tape or the soft pad made of a soft plastic waterproof material. The heat dissipation hole gasket 194 is an integral blocky structure, and can be connected in the containing groove 195 in a manner of glue adhering, a fastener or any other proper manners. Wherein, the heat dissipation hole 923 is selectively disposed in the battery pack 9, when the upper surface 922 of the battery pack 9 has the structure of the heat dissipation hole 923, the additionally disposed heat dissipation hole gasket 194 can block the heat dissipation hole 923 to realize the sealing and waterproof effects of the battery pack 9. Since the high-pressure washer in the present embodiment is in small current operation, normal use of the high-pressure washer 1 is not affected even the heat dissipation hole 923 of the battery pack 9 is blocked. In this way, due to the solution provided by the present embodiment, it is realized that the large current battery pack disposed with the structure of the heat dissipation hole 923 can be connected to the housing 10, and universalization of the battery pack 9 is realized.

## Claims

1. A high-pressure washer, comprising:
a housing, comprising a base disposed with a jointing surface;
tool terminals, connected to the base;
functional parts, comprising a motor disposed in the housing and a pump transporting water flows outward;
and wherein the high-pressure washer is capable of being electrically connected to a battery pack, the battery pack comprises a matching surface capable of being jointed and matched with the jointing surface and a plurality of battery pack terminals electrically connected to the tool terminals, the high-pressure washer and the battery pack are inserted and matched to form a jointing cavity electrically connected to the terminal of the battery pack, the jointing cavity is selectively configured on the high-pressure washer or the battery pack, the high-pressure washer is disposed with a sealing structure, and after the battery pack is inserted and matched with the high-pressure washer, the sealing structure is capable of sealing the jointing cavity.

2. The high-pressure washer according to claim 1, wherein the tool terminals at least partially and outward extends on the jointing surface, the battery pack comprises an insertion space containing the battery pack terminals and allowing the tool terminals to insert to be electrically connected to the battery pack terminals, and the insertion space forms the jointing cavity allowing the tool terminals to be electrically connected to the battery pack terminals.

3. The high-pressure washer according to claim 1, wherein the battery pack terminals at least partially and outward extend on the matching surface, the housing comprises a jointing space containing the tool terminals and allowing the battery pack terminals to insert to be electrically connected to the tool terminals, and the jointing space forms the jointing cavity allowing the tool terminals to be electrically connected to the battery pack terminals.

4. The high-pressure washer according to claim 1, wherein the sealing structure is connected to the jointing surface, the sealing structure is attached to at least part of the jointing surface, and after the battery pack is inserted and matched with the high-pressure washer, the sealing structure is capable of sealing the jointing cavity.

5. The high-pressure washer according to claim 1, wherein the sealing structure is a soft gasket, and comprises a plurality of openings to be correspondingly inserted by the tool terminals or the battery pack terminals.

6. The high-pressure washer according to claim 1, wherein the housing comprises a battery mounting seat, the battery mounting seat comprises a pair of opposite side parts, the side parts and the base define a battery pack receiving chamber, the battery pack receiving chamber at least has three walls, comprising a base wall and two side walls extending along a direction vertical to a direction of the base wall, the base comprises a top wall extending along a direction vertical to a direction of the jointing surface, the sealing structure is connected on the base wall, the top wall and the side walls, and after the high-pressure washer is inserted and matched with the battery pack, the jointing cavity is located in a region enclosed by the sealing structure.

7. The high-pressure washer according to claim 1, wherein the housing comprises a battery mounting seat, the battery mounting seat comprises a pair of opposite side parts, the side parts and the base define a battery pack receiving chamber, the battery pack receiving chamber at least has three walls, comprising a base wall and a pair of side walls extending along a direction vertical to a direction of the base wall, the side parts are disposed with a bottom wall vertical to the side walls, the sealing structure is connected on the bottom wall, the side walls and the base wall, and after the high-pressure washer is inserted and matched with the battery pack, the jointing cavity is located in a region enclosed by the sealing structure.

8. The high-pressure washer according to claim 1, wherein the battery pack comprises a pack bottom and a pack cover connected to the pack bottom, and the pack cover is disposed with a heat dissipation hole.

9. The high-pressure washer according to claim 8, wherein the high-pressure washer further comprises a heat dissipation hole gasket disposed on the housing and configured to seal the heat dissipation hole, and the heat dissipation hole gasket is located above the heat dissipation hole.

10. The high-pressure washer according to claim 9, wherein the housing comprises a containing groove for containing the heat dissipation hole gasket, and the heat dissipation hole gasket comprises an outer surface facing the heat dissipation hole, and when the heat dissipation hole gasket is connected to the containing groove, and the outer surface at least partially goes beyond the base wall of the housing.

11. The high-pressure washer according to claim 8, wherein the battery pack further comprises a heat dissipation hole gasket disposed on the housing and configured to seal the heat dissipation hole, and the heat dissipation hole gasket is located above the heat dissipation hole.

12. The high-pressure washer according to claim 1, wherein the high-pressure washer is a handheld high-pressure washer and the housing comprises a handle for holding and a main body portion disposed at an angle relative to the handle.

13. A high-pressure washer, capable of being electrically connected to a battery pack and comprising:
a housing, comprising a base disposed with a jointing surface;
tool terminals, connected to the base;
functional parts, comprising a motor disposed in the housing and a pump transporting water flows outward;
wherein the battery pack comprises a matching surface capable of being jointed and matched with the jointing surface and a plurality of battery pack terminals electrically connected to the tool terminals, the high-pressure washer and the battery pack are inserted and matched to form a jointing cavity allowing the tool terminals to be electrically connected to the battery pack terminals, and the jointing cavity is selectively configured on the high-pressure washer or the battery pack;
wherein at least one of the high-pressure washer and the battery pack is disposed with a sealing structure, and after the battery pack is inserted and matched with the high-pressure washer, the sealing structure is capable of sealing the jointing cavity.

14. The high-pressure washer according to claim 13, wherein the tool terminal at least partially outward extends convexly on the jointing surface, the battery pack comprises an insertion space containing the battery pack terminals and allowing the tool terminals to insert to be electrically connected to the battery pack terminals, and the insertion space forms the jointing cavity allowing the tool terminals to be electrically connected to the battery pack terminals.

15. The high-pressure washer according to claim 14, wherein the battery pack comprises a pack bottom and a pack cover connected to the pack bottom, the pack cover comprises a top surface and a boss convexly disposed from the top surface, the boss comprises an upper surface vertical to the matching surface and a pair of side surfaces connected to the upper surface and the top surface, and the insertion space is formed by concaving one or more surfaces of the upper surface, the matching surface and the side surfaces toward an inner cavity of the battery pack.

16. The high-pressure washer according to claim 15, wherein the sealing structure is attached to the one or more surfaces forming the insertion space, and after the battery pack is inserted and matched with the high-pressure washer, the insertion space is located in a region defined by the sealing structure, and the sealing structure is capable of hermetically isolating the insertion space from the outside.

17. The high-pressure washer according to claim 14, wherein the sealing structure is attached to one or more surfaces of the base, and after the battery pack is inserted and matched with the high-pressure washer, the insertion space is located in a region defined by the sealing structure, and the sealing structure is capable of hermetically isolating the insertion space from the outside.

18. The high-pressure washer according to claim 13, wherein the battery pack terminals at least partially and outward extend on the jointing surface, the housing comprises a jointing space containing the tool terminals and allowing the battery pack terminals to insert to be electrically connected to the tool terminals, and the jointing space forms the jointing cavity allowing the tool terminals to be electrically connected to the battery pack terminals.

19. The high-pressure washer according to claim 18, wherein the jointing space is formed by inward concaving one or more surfaces defining the base.

20. The high-pressure washer according to claim 19, wherein the sealing structure is attached to one or more surfaces forming the jointing space, and after the battery pack is inserted and matched with the high-pressure washer, the insertion space is located in a region defined by the sealing structure, and the sealing structure is capable of hermetically isolating the jointing space from the outside.

21. The high-pressure washer according to claim 13, wherein the housing comprises a battery mounting seat, the battery mounting seat comprises a pair of opposite side parts, the side parts and the base define a battery pack receiving chamber, the battery pack receiving chamber at least has three walls, comprising a base wall and two side walls extending along a direction vertical to a direction of the base wall, the base comprises a top wall extending along a direction vertical to a direction of the jointing surface, the sealing structure is connected on the base wall, the top wall and the side walls, and after the high-pressure washer is inserted and matched with the battery pack, the jointing cavity is located in a region defined by the sealing structure.

22. The high-pressure washer according to claim 13, wherein the housing comprises a battery mounting seat, the battery mounting seat comprises a pair of opposite side parts, the side parts and the base define a battery pack receiving chamber, the battery pack receiving chamber at least has three walls, comprising a base wall and a pair of side walls extending along a direction vertical to a direction of the base wall, the side parts are disposed with a bottom wall vertical to the side walls, the sealing structure is connected on the bottom wall, the side walls and the base wall, and after the high-pressure washer is inserted and matched with the battery pack, the jointing cavity is located in a region defined by the sealing structure.

23. The high-pressure washer according to claim 18, wherein the sealing structure is attached to one or more surfaces of the battery pack, and after the battery pack is inserted and matched with the high-pressure washer, the jointing space is located in a region defined by the sealing structure, and the sealing structure is capable of hermetically isolating the jointing space from the outside.

24. The high-pressure washer according to claim 13, wherein the sealing structure is connected to the matching surface of the battery pack, the sealing structure is attached to at least part of the matching surface, and after the battery pack is inserted and matched with the high-pressure washer, the sealing structure is capable of sealing the jointing cavity.

25. The high-pressure washer according to claim 13, wherein the battery pack comprises a pack bottom and a pack cover connected to the pack bottom, the pack cover comprises a top surface and a boss convexly disposed from the top surface, the boss comprises an upper surface vertical to the matching surface and a side surface connected to the upper surface and the top surface, the sealing structure is connected on the upper surface, the side surface and the top surface, and after the high-pressure washer is inserted and matched with the battery pack, the jointing cavity is located in a region defined by the sealing structure.

26. The high-pressure washer according to claim 13, wherein the sealing structure is of a blocky gasket or an elongated sealing strip.

27. A high-pressure washer combination, comprising a high-pressure washer and a battery pack electrically connected to the high-pressure washer, wherein the high-pressure washer comprises:
a houisng, comprising a base disposed with a jointing surface;
tool terminals, connected to the base;
functional parts, comprising a motor disposed in the housing and a pump transporting water flows outward;
the battery pack comprises:
a matching surface capable of being jointed and matched with the jointing surface; and
battery pack terminals electrically connected to the tool terminals;
the high-pressure washer and the battery pack are inserted and matched to form a jointing cavity allowing the tool terminals to be electrically connected to the battery pack terminals, and the jointing cavity is selectively configured on the high-pressure washer or the battery pack;
wherein at least one of the high-pressure washer and the battery pack is disposed with a sealing structure, and after the battery pack is inserted and matched with the high-pressure washer, the sealing structure is capable of sealing the jointing cavity.

28. The high-pressure washer combination according to claim 27, wherein the tool terminals at least partially and outward extends on the jointing surface, the battery pack comprises an insertion space containing the battery pack terminal and allowing the tool terminals to insert to be electrically connected to the battery pack terminals, and the insertion space forms the jointing cavity allowing the tool terminals to be electrically connected to the battery pack terminal.

29. The high-pressure washer combination according to claim 27, wherein in that the battery pack terminal at least partially and outward extends on the matching surface, the housing comprises a jointing space containing the tool terminals and allowing the battery pack terminals to insert to be electrically connected to the tool terminals, and the jointing space forms the jointing cavity allowing the tool terminal to be electrically connected to the battery pack terminal.

30. The high-pressure washer combination according to claim 27, wherein the sealing structure is connected to the jointing surface, the sealing structure is attached to part of the jointing surface, and after the battery pack is inserted and matched with the high-pressure washer, the sealing structure is capable of sealing the jointing cavity.
